(19) Europäisches Patentamt
European Patent Office
Office européen des brevets

(11) EP 3 008 231 B1

(12) **EUROPEAN PATENT SPECIFICATION**

(45) Date of publication and mention of the grant of the patent:
**08.05.2019 Bulletin 2019/19**

(21) Application number: **14811619.7**

(22) Date of filing: **06.06.2014**

(51) Int Cl.:
***D01F 8/06*** *(2006.01)*

(86) International application number:
**PCT/IB2014/062024**

(87) International publication number:
**WO 2014/199274 (18.12.2014 Gazette 2014/51)**

(54) **MULTI-FUNCTIONAL FABRIC**
MULTIFUNKTIONALES GEWEBE
ÉTOFFE MULTIFONCTIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 US 201361833985 P**
**22.11.2013 US 201361907552 P**

(43) Date of publication of application:
**20.04.2016 Bulletin 2016/16**

(73) Proprietor: **Kimberly-Clark Worldwide, Inc.**
**Neenah, Wisconsin 54956 (US)**

(72) Inventors:
- **TOPOLKARAEV, Vasily, A.**
**Neenah, Wisconsin 54956 (US)**
- **MCENEANY, Ryan, J.**
**Neenah, Wisconsin 54956 (US)**
- **SCHOLL, Neil, T.**
**Neenah, Wisconsin 54956 (US)**
- **MLEZIVA, Mark M.**
**Neenah, Wisconsin 54956 (US)**

(74) Representative: **Dehns**
**St. Brides House**
**10 Salisbury Square**
**London EC4Y 8JD (GB)**

(56) References cited:
**EP-A1- 2 412 426**
**WO-A1-2005/098101**
**WO-A2-2013/118019**
**US-A- 5 766 760**
**US-A- 6 071 451**
**US-A1- 2005 260 911**
**US-B1- 6 268 048**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 008 231 B1

## Description

### Background of the Invention

Fabrics are often used to provide protection from extreme temperatures, wind, rain, snow, and other environmental conditions. Unfortunately, conventional fabrics are stiff and bulky, and may likewise trap moisture. To avoid at least some of these shortcomings, thin breathable fabrics have been developed that allow vapor to be removed. Unfortunately, one of the common problems associated with many conventional types of breathable fabrics is that they are not generally multi-functional. For example, most breathable fabrics may have very limited water repellency or thermal insulating properties. Further, such fabrics tend to be relatively inflexible and also generate noise when in use. As such, a need currently exists for a fabric that contains a material capable of providing multiple benefits, such as breathability, water-repellency, thermal insulation, flexibility, etc. WO2013/118019 discloses a similar fabric comprising porous fibers.

### Summary of the Invention

In accordance with one embodiment of the present invention, a fabric is disclosed that includes a plurality of porous fibers formed from a thermoplastic composition containing a continuous phase that includes a polyolefin matrix polymer, and further wherein a microinclusion additive and a nanoinclusion additive are dispersed within the continuous phase in the form of discrete domains, wherein a porous network is defined in the composition that includes a plurality of nanopores having an average cross-sectional dimension of 800 nanometers or less;

wherein the microinclusion additive is selected from styrenic copolymers, polytetrafluoroethylenes, polyesters, polyvinyl acetates, polyvinyl alcohols, polyvinyl butyrals, acrylic resins, polyamides, polyvinyl chlorides, polyvinylidene chlorides, polystyrenes, and polyurethanes; and
wherein the nanoinclusion additive is present in the amount of from 0.05 to 10 wt.% of the thermoplastic composition, based on the weight of the continuous phase.

In one embodiment, the fabric may be a woven or knit fabric containing yarns, wherein at least a portion of the yarns include the porous fibers. If desired, the fabric may further contain textile fibers (e.g., generally inelastic textile fibers, elastic textile fibers, or a combination thereof). For example, the composite may include yarns formed from a combination of the porous fibers and the textile fibers and/or it may include yarns formed from the porous fibers and yarns formed from the textile fibers.

Other features and aspects of the present invention are discussed in greater detail below.

### Brief Description of the Drawings

A full and enabling disclosure of the present invention, including the best mode thereof, directed to one of ordinary skill in the art, is set forth more particularly in the remainder of the specification, which makes reference to the appended figures in which:

Fig. 1 is a schematic illustration of a process that may be used in one embodiment of the present invention to form fibers;
Fig. 2 is a perspective view of one embodiment of a coat that may include the fabric of the present invention;
Fig. 3 is a top view of a liner for a shoe that may be formed from the fabric of the present invention;
Fig. 4 is a cross-sectional view of the shoe liner of Fig. 3;
Fig. 5 is a perspective view of one embodiment of building insulation that may be formed from the fabric of the present invention and positioned adjacent to an exterior wall;
Fig. 6 is an SEM photomicrograph (1,000X) of the fiber of Example 8 (polypropylene, polylactic acid, and polyepoxide) after freeze fracturing in liquid nitrogen;
Fig. 7 is an SEM photomicrograph (5,000X) of the fiber of Example 8 (polypropylene, polylactic acid, and polyepoxide) after freeze fracturing in liquid nitrogen; and
Fig. 8 is an SEM photomicrograph (10,000X) of the fiber surface of Example 8 (polypropylene, polylactic acid, and polyepoxide).

Repeat use of references the characters in the present specification and drawings is intended to represent the same or analogous features or elements of the invention.

## Detailed Description of Representative Embodiments

Reference now will be made in detail to various embodiments of the invention, one or more examples of which are set forth below. Each example is provided by way of explanation of the invention, not limitation of the invention.

Generally speaking, the present invention is directed to a fabric that contains a plurality of fibers. Suitable fabrics may include, for instance, woven fabrics, knit fabrics, nonwoven fabrics (e.g., spunbond webs, meltblown webs, bonded carded webs, wet-laid webs, airlaid webs, coform webs, hydraulically entangled webs, etc.), and so forth. The fibers may be individual staple fibers or filaments (continuous fibers), as well as yarns formed from such fibers. Yarns may include, for instance, multiple staple fibers that are twisted together ("spun yarn"), filaments laid together without twist ("zero-twist yarn"), filaments laid together with a degree of twist, single filament with or without twist ("monofilament"), etc. The yarns may or may not be texturized.

Regardless of the particular nature of the fabric, it may serve multiple functions. For instance, the fibers are porous and define a porous network which, for instance, may constitute from 15% to 80% per $cm^3$, in some embodiments from about 20% to about 70%, and in some embodiments, from about 30% to about 60% per cubic centimeter of the fiber. The presence of such a high pore volume can allow the resulting fabric to be generally permeable to water vapors, thereby allowing such vapors to escape from the body during use. The permeability of the fabric to water vapor may be characterized by its relatively high water vapor transmission rate ("WVTR"), which is the rate at which water vapor permeates through a material as measured in units of grams per meter squared per 24 hours ($g/m^2/24$ hrs). For example, the fabric may exhibit a WVTR of 300 $g/m^2$-24 hours or more, in some embodiments about 500 $g/m^2$-24 hours or more, in some embodiments about 1,000 $g/m^2$-24 hours or more, and in some embodiments, from about 3,000 to about 15,000 $g/m^2$-24 hours, such as determined in accordance with ASTM E96/96M-12, Procedure B or INDA Test Procedure IST-70.4 (01). In addition to allowing the passage of vapors, the relatively high pore volume of the fibers can also significantly lower the density of the fibers, which can allow the use of lighter, more flexible materials that still achieve good properties. For example, the composition may have a relatively low density, such as 1.2 grams per cubic centimeter ("$g/cm^3$") or less, in some embodiments about 1.0 $g/cm^3$ or less, in some embodiments from about 0.2 $g/cm^3$ to about 0.8 $g/cm^3$, and in some embodiments, from about 0.1 $g/cm^3$ to about 0.5 $g/cm^3$.

Despite being highly porous and generally permeable to water vapor, the present inventors have nevertheless discovered that the porous network may be considered a "closed-cell" network such that a tortuous pathway is not defined between a substantial portion of the pores. Such a structure can help restrict the flow of fluids through the fabric so that it can be generally impermeable to fluids (e.g., liquid water). In this regard, the fabric may have a relatively high hydrohead value of 50 centimeters ("cm") or more, in some embodiments about 100 cm or more, in some embodiments, about 150 cm or more, and in some embodiments, from about 200 cm to about 1000 cm, as determined in accordance with ATTCC 127-2008.

A substantial portion of pores in the fibers may also be of a "nano-scale" size ("nanopores"), such as those having an average cross-sectional dimension of 800 nanometers or less, in some embodiments from about 1 to about 500 nanometers, in some embodiments from about 5 to about 450 nanometers, in some embodiments from about 5 to about 400 nanometers, and in some embodiments, from about 10 to about 100 nanometers. The term "cross-sectional dimension" generally refers to a characteristic dimension (e.g., width or diameter) of a pore, which is substantially orthogonal to its major axis (e.g., length) and also typically substantially orthogonal to the direction of the stress applied during drawing. Such nanopores may, for example, constitute about 15 vol.% or more, in some embodiments 20 vol.% or more, in some embodiments from about 30 vol.% to 100 vol.%, and in some embodiments, from about 40 vol.% to about 90 vol.% of the total pore volume in the fibers. The presence of such a high degree of nanopores can substantially decrease thermal conductivity as fewer cell molecules are available within each pore to collide and transfer heat. Thus, the fibers may also serve as thermal insulation to help limit the degree of heat transfer through the fabric.

To this end, the fabric may exhibit a relatively low thermal conductivity, such as about 0.40 watts per meter-kelvin ("W/m-K") or less, in some embodiments about 0.20 W/m-K or less, in some embodiments about 0.15 W/m-K or less, in some embodiments from about 0.01 to about 0.12 W/m-K, and in some embodiments, from 0.02 to 0.10 W/m-K. Notably, the fabric is capable of achieving such low thermal conductivity values at relatively low thicknesses, which can allow the fabric to possess a greater degree of flexibility and conformability, as well as reduce the space it occupies. For this reason, the fabric may also exhibit a relatively low "thermal admittance", which is equal to the thermal conductivity of the material divided by its thickness and is provided in units of watts per square meter-kelvins ("$W/m^2K$"). For example, the fabric may exhibit a thermal admittance of about 1000 $W/m^2K$ or less, in some embodiments from about 10 to about 800 $W/m^2K$, in some embodiments from about 20 to about 500 $W/m^2K$, and in some embodiments, from about 40 to about 200 $W/m^2K$. The actual thickness of the fabric may depend on its particular form, but typically ranges from about 50 micrometers to about 100 millimeters, in some embodiments from about 100 micrometers to about 50 millimeters, in some embodiments from about 200 micrometers to about 25 millimeters, and in some embodiments, from about 500 micrometers to about 5 millimeters.

Contrary to conventional techniques, the present inventors have discovered that the porous fibers of the present invention can be formed without the use of gaseous blowing agents. This is due in part to the unique nature of the components of the material, as well as the matter in which it is formed. More particularly, the porous fibers may be formed from a thermoplastic composition containing a continuous phase that includes a matrix polymer, microinclusion additive, and nanoinclusion additive. The additives may be selected so that they have a different elastic modulus than the matrix polymer. In this manner, the microinclusion and nanoinclusion additives can become dispersed within the continuous phase as discrete micro-scale and nano-scale phase domains, respectively. The present inventors have discovered that the micro-scale and nano-scale phase domains are able to interact in a unique manner when subjected to a deformation and elongational strain (e.g., drawing) to create a network of pores, a substantial portion of which are of a nano-scale size. Namely, it is believed that elongational strain can initiate intensive localized shear zones and/or stress intensity zones (e.g., normal stresses) near the micro-scale discrete phase domains as a result of stress concentrations that arise from the incompatibility of the materials. These shear and/or stress intensity zones cause some initial debonding in the polymer matrix adjacent to the micro-scale domains. Notably, however, localized shear and/or stress intensity zones may also be created near the nano-scale discrete phase domains that overlap with the micro-scale zones. Such overlapping shear and/or stress intensity zones cause even further debonding to occur in the polymer matrix, thereby creating a substantial number of nanopores adjacent to the nano-scale domains and/or micro-scale domains. In addition, because the pores are located adjacent to the discrete domains, a bridge can be formed between the boundaries of the pores that act as internal structural "hinges" that help stabilize the network and increase its ability to dissipate energy. Among other things, this enhances the flexibility of the resulting fabric and allows it to be more conformable.

Various embodiments of the present invention will now be described in more detail.

I. Thermoplastic Composition

A. Matrix Polymer

As indicated above, the thermoplastic composition contains a continuous phase that contains one or more matrix polymers, which typically constitute from 60 wt.% to 99 wt.%, in some embodiments from about 75 wt.% to about 98 wt.%, and in some embodiments, from about 80 wt.% to about 95 wt.% of the thermoplastic composition. The matrix polymer(s) is a polyolefin.

In certain cases, the thermoplastic composition may contain at least one polyester that is rigid in nature and thus has a relatively high glass transition temperature. For example, the glass transition temperature ("$T_g$") may be about 0°C or more, in some embodiments from about 5°C to about 100°C, in some embodiments from about 30°C to about 80°C, and in some embodiments, from about 50°C to about 75°C. The polyester may also have a melting temperature of from about 140°C to about 300°C, in some embodiments from about 150°C to about 250°C, and in some embodiments, from about 160°C to about 220°C. The melting temperature may be determined using differential scanning calorimetry ("DSC") in accordance with ASTM D-3417. The glass transition temperature may be determined by dynamic mechanical analysis in accordance with ASTM E1640-09.

One particularly suitable rigid polyester is polylactic acid, which may generally be derived from monomer units of any isomer of lactic acid, such as levorotory-lactic acid ("L-lactic acid"), dextrorotatory-lactic acid ("D-lactic acid"), meso-lactic acid, or mixtures thereof. Monomer units may also be formed from anhydrides of any isomer of lactic acid, including L-lactide, D-lactide, meso-lactide, or mixtures thereof. Cyclic dimers of such lactic acids and/or lactides may also be employed. Any known polymerization method, such as polycondensation or ring-opening polymerization, may be used to polymerize lactic acid. A small amount of a chain-extending agent (e.g., a diisocyanate compound, an epoxy compound or an acid anhydride) may also be employed. The polylactic acid may be a homopolymer or a copolymer, such as one that contains monomer units derived from L-lactic acid and monomer units derived from D-lactic acid. Although not required, the rate of content of one of the monomer unit derived from L-lactic acid and the monomer unit derived from D-lactic acid is preferably about 85 mole% or more, in some embodiments about 90 mole% or more, and in some embodiments, about 95 mole% or more. Multiple polylactic acids, each having a different ratio between the monomer unit derived from L-lactic acid and the monomer unit derived from D-lactic acid, may be blended at an arbitrary percentage. Of course, polylactic acid may also be blended with other types of polymers (e.g., polyolefins, polyesters, etc.).

In one particular embodiment, the polylactic acid has the following general structure:

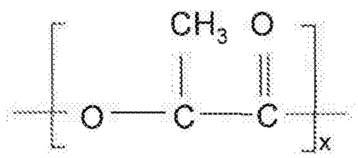

One specific example of a suitable polylactic acid polymer that may be used in the present invention is commercially available from Biomer, Inc. of Krailling, Germany) under the name BIOMER™ L9000. Other suitable polylactic acid polymers are commercially available from Natureworks LLC of Minnetonka, Minnesota (NATUREWORKS®) or Mitsui Chemical (LACEA™). Still other suitable polylactic acids may be described in U.S. Patent Nos. 4,797,468; 5,470,944; 5,770,682; 5,821,327; 5,880,254; and 6,326,458.

The polylactic acid typically has a number average molecular weight ("$M_n$") ranging from about 40,000 to about 180,000 grams per mole, in some embodiments from about 50,000 to about 160,000 grams per mole, and in some embodiments, from about 80,000 to about 120,000 grams per mole. Likewise, the polymer also typically has a weight average molecular weight ("$M_w$") ranging from about 80,000 to about 250,000 grams per mole, in some embodiments from about 100,000 to about 200,000 grams per mole, and in some embodiments, from about 110,000 to about 160,000 grams per mole. The ratio of the weight average molecular weight to the number average molecular weight ("$M_w/M_n$"), i.e., the "polydispersity index", is also relatively low. For example, the polydispersity index typically ranges from about 1.0 to about 3.0, in some embodiments from about 1.1 to about 2.0, and in some embodiments, from about 1.2 to about 1.8. The weight and number average molecular weights may be determined by methods known to those skilled in the art.

The polylactic acid may also have an apparent viscosity of from about 50 to about 600 Pascal seconds (Pa·s), in some embodiments from about 100 to about 500 Pa·s, and in some embodiments, from about 200 to about 400 Pa·s, as determined at a temperature of 190°C and a shear rate of 1000 $sec^{-1}$. The melt flow rate of the polylactic acid (on a dry basis) may also range from about 0.1 to about 40 grams per 10 minutes, in some embodiments from about 0.5 to about 20 grams per 10 minutes, and in some embodiments, from about 5 to about 15 grams per 10 minutes, determined at a load of 2160 grams and at 190°C.

Some types of neat polyesters (e.g., polylactic acid) can absorb water from the ambient environment such that it has a moisture content of about 500 to 600 parts per million ("ppm"), or even greater, based on the dry weight of the starting polylactic acid. Moisture content may be determined in a variety of ways as is known in the art, such as in accordance with ASTM D 7191-05, such as described below. Because the presence of water during melt processing can hydrolytically degrade the polyester and reduce its molecular weight, it is sometimes desired to dry the polyester prior to blending. In most embodiments, for example, it is desired that the polyester have a moisture content of about 300 parts per million ("ppm") or less, in some embodiments about 200 ppm or less, in some embodiments from about 1 to about 100 ppm prior to blending with the microinclusion and nanoinclusion additives. Drying of the polyester may occur, for instance, at a temperature of from about 50°C to about 100°C, and in some embodiments, from about 70°C to about 80°C.

B. <u>Microinclusion Additive</u>

As indicated above, microinclusion and nanoinclusion additives are dispersed within the continuous phase of the thermoplastic composition. As used herein, the term "microinclusion additive" generally refers to any amorphous, crystalline, or semi-crystalline material that is capable of being dispersed within the polymer matrix in the form of discrete domains of a micro-scale size. For example, prior to drawing, the domains may have an average cross-sectional dimension of from about 0.05 μm to about 30 μm, in some embodiments from about 0.1 μm to about 25 μm, in some embodiments from about 0.5 μm to about 20 μm, and in some embodiments from about 1 μm to about 10 μm. The term "cross-sectional dimension" generally refers to a characteristic dimension (e.g., width or diameter) of a domain, which is substantially orthogonal to its major axis (e.g., length) and also typically substantially orthogonal to the direction of the stress applied during drawing. While typically formed from the microinclusion additive, it should be also understood that the micro-scale domains may also be formed from a combination of the microinclusion and nanoinclusion additives and/or other components of the composition.

The microinclusion additive is generally polymeric in nature and possesses a relatively high molecular weight to help improve the melt strength and stability of the thermoplastic composition. Typically, the microinclusion polymer may be generally immiscible with the matrix polymer. In this manner, the additive can better become dispersed as discrete phase domains within a continuous phase of the matrix polymer. The discrete domains are capable of absorbing energy that arises from an external force, which increases the overall toughness and strength of the resulting material. The domains may have a variety of different shapes, such as elliptical, spherical, cylindrical, plate-like, tubular, etc. In one embodiment, for example, the domains have a substantially elliptical shape. The physical dimension of an individual domain is typically small enough to minimize the propagation of cracks through the fibers upon the application of an external stress, but large enough to initiate microscopic plastic deformation and allow for shear and/or stress intensity zones at and around particle inclusions.

While the polymers may be immiscible, the microinclusion additive may nevertheless be selected to have a solubility parameter that is relatively similar to that of the matrix polymer. This can improve the interfacial compatibility and physical interaction of the boundaries of the discrete and continuous phases, and thus reduces the likelihood that the composition will fracture. In this regard, the ratio of the solubility parameter for the matrix polymer to that of the

additive is typically from 0.5 to 1.5, and in some embodiments, from about 0.8 to about 1.2. For example, the microinclusion additive may have a solubility parameter of from about 15 to about 30 MJoules$^{1/2}$/m$^{3/2}$, and in some embodiments, from about 18 to about 22 MJoules$^{1/2}$/m$^{3/2}$, while polylactic acid may have a solubility parameter of about 20.5 MJoules$^{1/2}$/m$^{3/2}$. The term "solubility parameter" as used herein refers to the "Hildebrand Solubility Parameter", which is the square root of the cohesive energy density and calculated according to the following equation:

$$\delta = \sqrt{((\Delta H_v - RT)/V_m)}$$

where:

*Δ Hv = heat of vaporization*
*R = Ideal Gas constant*
*T = Temperature*
*Vm = Molecular Volume*

The Hildebrand solubility parameters for many polymers are also available from the Solubility Handbook of Plastics, by Wyeych (2004).

The microinclusion additive may also have a certain melt flow rate (or viscosity) to ensure that the discrete domains and resulting pores can be adequately maintained. For example, if the melt flow rate of the additive is too high, it tends to flow and disperse uncontrollably through the continuous phase. This results in lamellar, plate-like domains or co-continuous phase structures that are difficult to maintain and also likely to prematurely fracture. Conversely, if the melt flow rate of the additive is too low, it tends to clump together and form very large elliptical domains, which are difficult to disperse during blending. This may cause uneven distribution of the additive through the entirety of the continuous phase. In this regard, the present inventors have discovered that the ratio of the melt flow rate of the microinclusion additive to the melt flow rate of the matrix polymer is typically from 0.2 to 8, in some embodiments from about 0.5 to about 6, and in some embodiments, from about 1 to about 5. The microinclusion additive may, for example, have a melt flow rate of from about 0.1 to about 250 grams per 10 minutes, in some embodiments from about 0.5 to about 200 grams per 10 minutes, and in some embodiments, from about 5 to about 150 grams per 10 minutes, determined at a load of 2160 grams and at 190°C.

In addition to the properties noted above, the mechanical characteristics of the microinclusion additive may also be selected to achieve the desired increase in toughness. For example, when a blend of the matrix polymer and microinclusion additive is applied with an external force, stress concentrations (e.g., including normal or shear stresses) and shear and/or plastic yielding zones may be initiated at and around the discrete phase domains as a result of stress concentrations that arise from a difference in the elastic modulus of the additive and matrix polymer. Larger stress concentrations promote more intensive localized plastic flow at the domains, which allows them to become significantly elongated when stresses are imparted. These elongated domains can allow the composition to exhibit a more pliable and softer behavior than the matrix polymer, such as when it is a rigid polyester resin. To enhance the stress concentrations, the microinclusion additive may be selected to have a relatively low Young's modulus of elasticity in comparison to the matrix polymer. For example, the ratio of the modulus of elasticity of the matrix polymer to that of the additive is typically from 1 to 250, in some embodiments from about 2 to about 100, and in some embodiments, from about 2 to about 50. The modulus of elasticity of the microinclusion additive may, for instance, range from about 2 to about 1000 Megapascals (MPa), in some embodiments from about 5 to about 500 MPa, and in some embodiments, from about 10 to about 200 MPa. To the contrary, the modulus of elasticity of polylactic acid, for example, is typically from about 800 MPa to about 3000 MPa.

The microinclusion additive is selected from styrenic copolymers (e.g., styrene-butadiene-styrene, styrene-isoprene-styrene, styrene-ethylene-propylene-styrene, styrene-ethylene-butadiene-styrene, etc.); polytetrafluoroethylenes; polyesters (e.g., recycled polyester, polyethylene terephthalate, etc.); polyvinyl acetates (e.g., poly(ethylene vinyl acetate), polyvinyl chloride acetate, etc.); polyvinyl alcohols (e.g., polyvinyl alcohol, poly(ethylene vinyl alcohol), etc.); polyvinyl butyrals; acrylic resins (e.g., polyacrylate, polymethylacrylate, polymethylmethacrylate, etc.); polyamides (e.g., nylon); polyvinyl chlorides; polyvinylidene chlorides; polystyrenes; polyurethanes; etc.

Suitable polyolefins for use in the nanoinclusion additive may, for instance, include ethylene polymers (e.g., low density polyethylene ("LDPE"), high density polyethylene ("HDPE"), linear low density polyethylene ("LLDPE"), etc.), propylene homopolymers (e.g., syndiotactic, atactic, isotactic, etc.), propylene copolymers, and so forth.

In one particular embodiment, the polymer is a propylene polymer, such as homopolypropylene or a copolymer of propylene. The propylene polymer may, for instance, be formed from a substantially isotactic polypropylene homopolymer or a copolymer containing equal to or less than about 10 wt.% of other monomer, i.e., at least about 90% by weight

propylene. Such homopolymers may have a melting point of from about 160°C to about 170°C.

In still another embodiment, the polyolefin may be a copolymer of ethylene or propylene with another α-olefin, such as a $C_3$-$C_{20}$ α-olefin or $C_3$-$C_{12}$ α-olefin. Specific examples of suitable α-olefins include 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired α-olefin comonomers are 1-butene, 1-hexene and 1-octene. The ethylene or propylene content of such copolymers may be from about 60 mole% to about 99 mole%, in some embodiments from about 80 mole% to about 98.5 mole%, and in some embodiments, from about 87 mole% to about 97.5 mole%. The α-olefin content may likewise range from about 1 mole% to about 40 mole%, in some embodiments from about 1.5 mole% to about 15 mole%, and in some embodiments, from about 2.5 mole% to about 13 mole%.

Exemplary olefin copolymers for use in the present invention include ethylene-based copolymers available under the designation EXACT™ from ExxonMobil Chemical Company of Houston, Texas. Other suitable ethylene copolymers are available under the designation ENGAGE™, AFFINITY™, DOWLEX™ (LLDPE) and ATTANE™ (ULDPE) from Dow Chemical Company of Midland, Michigan. Other suitable ethylene polymers are described in U.S. Patent Nos. 4,937,299 to Ewen et al.; 5,218,071 to Tsutsui et al.; 5,272,236 to Lai, et al.; and 5,278,272 to Lai, et al. Suitable propylene copolymers are also commercially available under the designations VISTAMAXX™ from ExxonMobil Chemical Co. of Houston, Texas; FINA™ (e.g., 8573) from Atofina Chemicals of Feluy, Belgium; TAFMER™ available from Mitsui Petrochemical Industries; and VERSIFY™ available from Dow Chemical Co. of Midland, Michigan. Suitable polypropylene homopolymers may likewise include Exxon Mobil 3155 polypropylene, Exxon Mobil Achieve™ resins, and Total M3661 PP resin. Other examples of suitable propylene polymers are described in U.S. Patent Nos. 6,500,563 to Datta, et al.; 5,539,056 to Yang, et al.; and 5,596,052 to Resconi, et al.

Any of a variety of known techniques may generally be employed to form the olefin copolymers. For instance, olefin polymers may be formed using a free radical or a coordination catalyst (e.g., Ziegler-Natta). Preferably, the olefin polymer is formed from a single-site coordination catalyst, such as a metallocene catalyst. Such a catalyst system produces ethylene copolymers in which the comonomer is randomly distributed within a molecular chain and uniformly distributed across the different molecular weight fractions. Metallocene-catalyzed polyolefins are described, for instance, in U.S. Patent Nos. 5,571,619 to McAlpin et al.; 5,322,728 to Davis et al.; 5,472,775 to Obijeski et al.; 5,272,236 to Lai et al.; and 6,090,325 to Wheat, et al. Examples of metallocene catalysts include bis(n-butylcyclopentadienyl)titanium dichloride, bis(n-butylcyclopentadienyl)zirconium dichloride, bis(cyclopentadienyl)scandium chloride, bis(indenyl)zirconium dichloride, bis(methylcyclopentadienyl)titanium dichloride, bis(methylcyclopentadienyl)zirconium dichloride, cobaltocene, cyclopentadienyltitanium trichloride, ferrocene, hafnocene dichloride, isopropyl(cyclopentadienyl,-1-flourenyl)zirconium dichloride, molybdocene dichloride, nickelocene, niobocene dichloride, ruthenocene, titanocene dichloride, zirconocene chloride hydride, zirconocene dichloride, and so forth. Polymers made using metallocene catalysts typically have a narrow molecular weight range. For instance, metallocene-catalyzed polymers may have polydispersity numbers ($M_w/M_n$) of below 4, controlled short chain branching distribution, and controlled isotacticity.

Regardless of the materials employed, the relative percentage of the microinclusion additive in the thermoplastic composition is selected to achieve the desired properties without significantly impacting the base properties of the composition. For example, the microinclusion additive is typically employed in an amount of from 1 wt.% to 30 wt.%, in some embodiments from about 2 wt.% to about 25 wt.%, and in some embodiments, from about 5 wt.% to about 20 wt.% of the thermoplastic composition, based on the weight of the continuous phase (matrix polymer(s)). The concentration of the microinclusion additive in the entire thermoplastic composition may likewise constitute from about 0.1 wt.% to about 30 wt.%, in some embodiments from about 0.5 wt.% to about 25 wt.%, and in some embodiments, from about 1 wt.% to about 20 wt.%.

C. Nanoinclusion Additive

As used herein, the term "nanoinclusion additive" generally refers to any amorphous, crystalline, or semi-crystalline material that is capable of being dispersed within the polymer matrix in the form of discrete domains of a nano-scale size. For example, prior to drawing, the domains may have an average cross-sectional dimension of from 1 to 500 nanometers, in some embodiments from 2 to 400 nanometers, and in some embodiments, from about 5 to about 300 nanometers. The nanoinclusion additive is employed in an amount of from 0.05 wt.% to 10 wt.%, in some embodiments from 0.1 wt.% to 10 wt.%, and in some embodiments, from 0.5 wt.% to 5 wt.% of the thermoplastic composition, based on the weight of the continuous phase (matrix polymer(s)). The concentration of the nanoinclusion additive in the entire thermoplastic composition may be from 0.3 wt.% to 6 wt.% of the thermoplastic composition.

The nanoinclusion additive may be polymeric in nature and possess a relatively high molecular weight to help improve the melt strength and stability of the thermoplastic composition. To enhance its ability to become dispersed into

nano-scale domains, the nanoinclusion additive may also be selected from materials that are generally compatible with the matrix polymer and the microinclusion additive. This may be particularly useful when the matrix polymer or the microinclusion additive possesses a polar moiety, such as a polyester. One example such a nanoinclusion additive is a functionalized polyolefin. The polar component may, for example, be provided by one or more functional groups and the non-polar component may be provided by an olefin. The olefin component of the nanoinclusion additive may generally be formed from any linear or branched α-olefin monomer, oligomer, or polymer (including copolymers) derived from an olefin monomer, such as described above.

The functional group of the nanoinclusion additive may be any group, molecular segment and/or block that provides a polar component to the molecule and is not compatible with the matrix polymer. Examples of molecular segment and/or blocks not compatible with polyolefin may include acrylates, styrenics, polyesters, polyamides, etc. The functional group can have an ionic nature and comprise charged metal ions. Particularly suitable functional groups are maleic anhydride, maleic acid, fumaric acid, maleimide, maleic acid hydrazide, a reaction product of maleic anhydride and diamine, methylnadic anhydride, dichloromaleic anhydride, maleic acid amide, etc. Maleic anhydride modified polyolefins are particularly suitable for use in the present invention. Such modified polyolefins are typically formed by grafting maleic anhydride onto a polymeric backbone material. Such maleated polyolefins are available from E. I. du Pont de Nemours and Company under the designation Fusabond®, such as the P Series (chemically modified polypropylene), E Series (chemically modified polyethylene), C Series (chemically modified ethylene vinyl acetate), A Series (chemically modified ethylene acrylate copolymers or terpolymers), or N Series (chemically modified ethylene-propylene, ethylene-propylene diene monomer ("EPDM") or ethylene-octene). Alternatively, maleated polyolefins are also available from Chemtura Corp. under the designation Polybond® and Eastman Chemical Company under the designation Eastman G series.

In certain embodiments, the nanoinclusion additive may also be reactive. One example of such a reactive nanoinclusion additive is a polyepoxide that contains, on average, at least two oxirane rings per molecule. Without intending to be limited by theory, it is believed that such polyepoxide molecules can induce reaction of the matrix polymer (e.g., polyester) under certain conditions, thereby improving its melt strength without significantly reducing glass transition temperature. The reaction may involve chain extension, side chain branching, grafting, copolymer formation, etc. Chain extension, for instance, may occur through a variety of different reaction pathways. For instance, the modifier may enable a nucleophilic ring-opening reaction via a carboxyl terminal group of a polyester (esterification) or via a hydroxyl group (etherification). Oxazoline side reactions may likewise occur to form esteramide moieties. Through such reactions, the molecular weight of the matrix polymer may be increased to counteract the degradation often observed during melt processing. While it may be desirable to induce a reaction with the matrix polymer as described above, the present inventors have discovered that too much of a reaction can lead to crosslinking between polymer backbones. If such crosslinking is allowed to proceed to a significant extent, the resulting polymer blend can become brittle and difficult to process into a material with the desired strength and elongation properties.

In this regard, the present inventors have discovered that polyepoxides having a relatively low epoxy functionality are particularly effective, which may be quantified by their "epoxy equivalent weight." The epoxy equivalent weight reflects the amount of resin that contains one molecule of an epoxy group, and it may be calculated by dividing the number average molecular weight of the modifier by the number of epoxy groups in the molecule. The polyepoxide of the present invention typically has a number average molecular weight from about 7,500 to about 250,000 grams per mole, in some embodiments from about 15,000 to about 150,000 grams per mole, and in some embodiments, from about 20,000 to 100,000 grams per mole, with a polydispersity index typically ranging from 2.5 to 7. The polyepoxide may contain less than 50, in some embodiments from 5 to 45, and in some embodiments, from 15 to 40 epoxy groups. In turn, the epoxy equivalent weight may be less than about 15,000 grams per mole, in some embodiments from about 200 to about 10,000 grams per mole, and in some embodiments, from about 500 to about 7,000 grams per mole.

The polyepoxide may be a linear or branched, homopolymer or copolymer (e.g., random, graft, block, etc.) containing terminal epoxy groups, skeletal oxirane units, and/or pendent epoxy groups. The monomers employed to form such polyepoxides may vary. In one particular embodiment, for example, the polyepoxide contains at least one epoxy-functional (meth)acrylic monomeric component. As used herein, the term "(meth)acrylic" includes acrylic and methacrylic monomers, as well as salts or esters thereof, such as acrylate and methacrylate monomers. For example, suitable epoxy-functional (meth)acrylic monomers may include, but are not limited to, those containing 1,2-epoxy groups, such as glycidyl acrylate and glycidyl methacrylate. Other suitable epoxy-functional monomers include allyl glycidyl ether, glycidyl ethacrylate, and glycidyl itoconate.

The polyepoxide typically has a relatively high molecular weight, as indicated above, so that it may not only result in chain extension, but also help to achieve the desired blend morphology. The resulting melt flow rate of the polymer is thus typically within a range of from about 10 to about 200 grams per 10 minutes, in some embodiments from about 40 to about 150 grams per 10 minutes, and in some embodiments, from about 60 to about 120 grams per 10 minutes, determined at a load of 2160 grams and at a temperature of 190°C.

If desired, additional monomers may also be employed in the polyepoxide to help achieve the desired molecular

weight. Such monomers may vary and include, for example, ester monomers, (meth)acrylic monomers, olefin monomers, amide monomers, etc. In one particular embodiment, for example, the polyepoxide includes at least one linear or branched α-olefin monomer, such as those having from 2 to 20 carbon atoms and preferably from 2 to 8 carbon atoms. Specific examples include ethylene, propylene, 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired α-olefin comonomers are ethylene and propylene.

Another suitable monomer may include a (meth)acrylic monomer that is not epoxy-functional. Examples of such (meth)acrylic monomers may include methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, 2-hydroxyethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, isobornyl methacrylate, etc., as well as combinations thereof.

In one particularly desirable embodiment of the present invention, the polyepoxide is a terpolymer formed from an epoxy-functional (meth)acrylic monomeric component, α-olefin monomeric component, and non-epoxy functional (meth)acrylic monomeric component. For example, the polyepoxide may be poly(ethylene-*co*-methylacrylate-*co*-glycidyl methacrylate), which has the following structure:

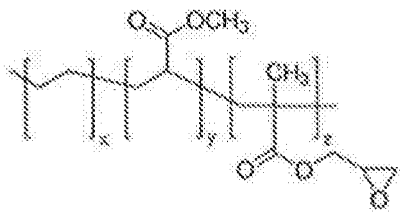

wherein, x, y, and z are 1 or greater.

The epoxy functional monomer may be formed into a polymer using a variety of known techniques. For example, a monomer containing polar functional groups may be grafted onto a polymer backbone to form a graft copolymer. Such grafting techniques are well known in the art and described, for instance, in U.S. Patent No. 5,179,164. In other embodiments, a monomer containing epoxy functional groups may be copolymerized with a monomer to form a block or random copolymer using known free radical polymerization techniques, such as high pressure reactions, Ziegler-Natta catalyst reaction systems, single site catalyst (e.g., metallocene) reaction systems, etc.

The relative portion of the monomeric component(s) may be selected to achieve a balance between epoxy-reactivity and melt flow rate. More particularly, high epoxy monomer contents can result in good reactivity with the matrix polymer, but too high of a content may reduce the melt flow rate to such an extent that the polyepoxide adversely impacts the melt strength of the polymer blend. Thus, in most embodiments, the epoxy-functional (meth)acrylic monomer(s) constitute from about 1 wt.% to about 25 wt.%, in some embodiments from about 2 wt.% to about 20 wt.%, and in some embodiments, from about 4 wt.% to about 15 wt.% of the copolymer. The α-olefin monomer(s) may likewise constitute from about 55 wt.% to about 95 wt.%, in some embodiments from about 60 wt.% to about 90 wt.%, and in some embodiments, from about 65 wt.% to about 85 wt.% of the copolymer. When employed, other monomeric components (e.g., non-epoxy functional (meth)acrylic monomers) may constitute from about 5 wt.% to about 35 wt.%, in some embodiments from about 8 wt.% to about 30 wt.%, and in some embodiments, from about 10 wt.% to about 25 wt.% of the copolymer. One specific example of a suitable polyepoxide that may be used in the present invention is commercially available from Arkema under the name LOTADER® AX8950 or AX8900. LOTADER® AX8950, for instance, has a melt flow rate of 70 to 100 g/10 min and has a glycidyl methacrylate monomer content of 7 wt.% to 11 wt.%, a methyl acrylate monomer content of 13 wt.% to 17 wt.%, and an ethylene monomer content of 72 wt.% to 80 wt.%. Another suitable polyepoxide is commercially available from DuPont under the name ELVALOY® PTW, which is a terpolymer of ethylene, butyl acrylate, and glycidyl methacrylate and has a melt flow rate of 12 g/10 min.

In addition to controlling the type and relative content of the monomers used to form the polyepoxide, the overall weight percentage may also be controlled to achieve the desired benefits. For example, if the modification level is too low, the desired increase in melt strength and mechanical properties may not be achieved. The present inventors have also discovered, however, that if the modification level is too high, processing may be restricted due to strong molecular interactions (e.g., crosslinking) and physical network formation by the epoxy functional groups. Thus, if present the

polyepoxide is typically employed in an amount of from 0.05 wt.% to 10 wt.%, in some embodiments from about 0.1 wt.% to about 8 wt.%, in some embodiments from about 0.5 wt.% to about 5 wt.%, and in some embodiments, from about 1 wt.% to about 3 wt.%, based on the weight of the matrix polymer employed in the composition. The polyepoxide may also constitute from about 0.05 wt.% to about 10 wt.%, in some embodiments from about 0.05 wt.% to about 8 wt.%, in some embodiments from about 0.1 wt.% to about 5 wt.%, and in some embodiments, from about 0.5 wt.% to about 3 wt.%, based on the total weight of the composition.

Other reactive nanoinclusion additives may also be employed in the present invention, such as oxazoline-functionalized polymers, cyanide-functionalized polymers, etc. When employed, such reactive nanoinclusion additives may be employed within the concentrations noted above for the polyepoxide. In one particular embodiment, an oxazoline-grafted polyolefin may be employed that is a polyolefin grafted with an oxazoline ring-containing monomer. The oxazoline may include a 2-oxazoline, such as 2-vinyl-2-oxazoline (e.g., 2-isopropenyl-2-oxazoline), 2-fatty-alkyl-2-oxazoline (e.g., obtainable from the ethanolamide of oleic acid, linoleic acid, palmitoleic acid, gadoleic acid, erucic acid and/or arachidonic acid) and combinations thereof. In another embodiment, the oxazoline may be selected from ricinoloxazoline maleinate, undecyl-2-oxazoline, soya-2-oxazoline, ricinus-2-oxazoline and combinations thereof, for example. In yet another embodiment, the oxazoline is selected from 2-isopropenyl-2-oxazoline, 2-isopropenyl-4,4-dimethyl-2-oxazoline and combinations thereof.

Nanofillers may also be employed, such as carbon black, carbon nanotubes, carbon nanofibers, nanoclays, metal nanoparticles, nanosilica, nanoalumina, etc. Nanoclays are particularly suitable. The term "nanoclay" generally refers to nanoparticles of a clay material (a naturally occurring mineral, an organically modified mineral, or a synthetic nanomaterial), which typically have a platelet structure. Examples of nanoclays include, for instance, montmorillonite (2:1 layered smectite clay structure), bentonite (aluminium phyllosilicate formed primarily of montmorillonite), kaolinite (1:1 aluminosilicate having a platy structure and empirical formula of $Al_2Si_2O_5(OH)_4$), halloysite (1:1 aluminosilicate having a tubular structure and empirical formula of $Al_2Si_2O_5(OH)_4$), etc. An example of a suitable nanoclay is Cloisite®, which is a montmorillonite nanoclay and commercially available from Southern Clay Products, Inc. Other examples of synthethic nanoclays include but are not limited to a mixed-metal hydroxide nanoclay, layered double hydroxide nanoclay (e.g., sepiocite), laponite, hectorite, saponite, indonite, etc.

If desired, the nanoclay may contain a surface treatment to help improve compatibility with the matrix polymer (e.g., polyester). The surface treatment may be organic or inorganic. In one embodiment, an organic surface treatment is employed that is obtained by reacting an organic cation with the clay. Suitable organic cations may include, for instance, organoquaternary ammonium compounds that are capable of exchanging cations with the clay, such as dimethyl bis[hydrogenated tallow] ammonium chloride (2M2HT), methyl benzyl bis[hydrogenated tallow] ammonium chloride (MB2HT), methyl tris[hydrogenated tallow alkyl] chloride (M3HT), etc. Examples of commercially available organic nanoclays may include, for instance, Dellite® 43B (Laviosa Chimica of Livorno, Italy), which is a montmorillonite clay modified with dimethyl benzylhydrogenated tallow ammonium salt. Other examples include Cloisite® 25A and Cloisite® 30B (Southern Clay Products) and Nanofil 919 (Süd Chemie). If desired, the nanofiller can be blended with a carrier resin to form a masterbatch that enhances the compatibility of the additive with the other polymers in the composition. Particularly suitable carrier resins include, for instance, polyesters (e.g., polylactic acid, polyethylene terephthalate, etc.); polyolefins (e.g., ethylene polymers, propylene polymers, etc.); and so forth, as described in more detail above.

In certain embodiments of the present invention, multiple nanoinclusion additives may be employed in combination. For instance, a first nanoinclusion additive (e.g., polyepoxide) may be dispersed in the form of domains having an average cross-sectional dimension of from about 50 to about 500 nanometers, in some embodiments from about 60 to about 400 nanometers, and in some embodiments from about 80 to about 300 nanometers. A second nanoinclusion additive (e.g., nanofiller) may also be dispersed in the form of domains that are smaller than the first nanoinclusive additive, such as those having an average cross-sectional dimension of from about 1 to about 50 nanometers, in some embodiments from about 2 to about 45 nanometers, and in some embodiments from about 5 to about 40 nanometers. When employed, the first and/or second nanoinclusion additives constitute from 0.05 wt.% to 10 wt.%, in some embodiments from about 0.1 wt.% to 10 wt.%, and in some embodiments, from about 0.5 wt.% to about 5 wt.% of the thermoplastic composition, based on the weight of the continuous phase (matrix polymer(s)). The concentration of the first and/or second nanonclusion additives in the entire thermoplastic composition may likewise be from about 0.01 wt.% to about 15 wt.%, in some embodiments from about 0.05 wt.% to about 10 wt.%, and in some embodiments, from about 0.1 wt.% to about 8 wt.% of the thermoplastic composition.

D. Other Components

A wide variety of ingredients may be employed in the composition for a variety of different reasons. For instance, in one particular embodiment, an interphase modifier may be employed in the thermoplastic composition to help reduce the degree of friction and connectivity between the microinclusion additive and matrix polymer, and thus enhance the degree and uniformity of debonding. In this manner, the pores can become distributed in a more homogeneous fashion

throughout the composition. The modifier may be in a liquid or semi-solid form at room temperature (e.g., 25°C) so that it possesses a relatively low viscosity, allowing it to be more readily incorporated into the thermoplastic composition and to easily migrate to the polymer surfaces. In this regard, the kinematic viscosity of the interphase modifier is typically from 0.7 to 200 centistokes ("cs"), in some embodiments from about 1 to about 100 cs, and in some embodiments, from about 1.5 to about 80 cs, determined at 40°C. In addition, the interphase modifier is also typically hydrophobic so that it has an affinity for the microinclusion additive, for example, resulting in a change in the interfacial tension between the matrix polymer and the additive. By reducing physical forces at the interfaces between the matrix polymer and the microinclusion additive, it is believed that the low viscosity, hydrophobic nature of the modifier can help facilitate debonding. As used herein, the term "hydrophobic" typically refers to a material having a contact angle of water in air of about 40° or more, and in some cases, about 60° or more. In contrast, the term "hydrophilic" typically refers to a material having a contact angle of water in air of less than about 40°. One suitable test for measuring the contact angle is ASTM D5725-99 (2008).

Suitable hydrophobic, low viscosity interphase modifiers may include, for instance, silicones, silicone-polyether copolymers, aliphatic polyesters, aromatic polyesters, alkylene glycols (e.g., ethylene glycol, diethylene glycol, triethylene glycol, tetraethylene glycol, propylene glycol, polyethylene glycol, polypropylene glycol, polybutylene glycol, etc.), alkane diols (e.g., 1,3-propanediol, 2,2-dimethyl-1,3-propanediol, 1,3-butanediol, 1,4-butanediol, 1,5-pentanediol, 1,6-hexanediol, 2,2,4-trimethyl-1,6 hexanediol, 1,3-cyclohexanedimethanol, 1,4-cyclohexanedimethanol, 2,2,4,4-tetramethyl-1,3-cyclobutanediol, etc.), amine oxides (e.g., octyldimethylamine oxide), fatty acid esters, fatty acid amides (e.g., oleamide, erucamide, stearamide, ethylene bis(stearamide), , etc.), mineral, and vegetable oils, and so forth. One particularly suitable liquid or semi-solid is polyether polyol, such as commercially available under the trade name Pluriol® WI from BASF Corp. Another suitable modifier is a partially renewable ester, such as commercially available under the trade name HALLGREEN® IM from Hallstar.

When employed, the interphase modifier may constitute from 0.1 wt.% to 20 wt.%, in some embodiments from about 0.5 wt.% to about 15 wt.%, and in some embodiments, from about 1 wt.% to about 10 wt.% of the thermoplastic composition, based on the weight of the continuous phase (matrix polymer(s)). The concentration of the interphase modifier in the entire thermoplastic composition may likewise constitute from about 0.05 wt.% to about 20 wt.%, in some embodiments from about 0.1 wt.% to about 15 wt.%, and in some embodiments, from about 0.5 wt.% to about 10 wt.%.

When employed in the amounts noted above, the interphase modifier has a character that enables it to readily migrate to the interfacial surface of the polymers and facilitate debonding without disrupting the overall melt properties of the thermoplastic composition. For example, the interphase modifier does not typically have a plasticizing effect on the polymer by reducing its glass transition temperature. Quite to the contrary, the present inventors have discovered that the glass transition temperature of the thermoplastic composition may be substantially the same as the initial matrix polymer. In this regard, the ratio of the glass temperature of the composition to that of the matrix polymer is typically from about 0.7 to about 1.3, in some embodiments from about 0.8 to about 1.2, and in some embodiments, from about 0.9 to about 1.1. The thermoplastic composition may, for example, have a glass transition temperature of from about 35°C to about 80°C, in some embodiments from about 40°C to about 80°C, and in some embodiments, from about 50°C to about 65°C. The melt flow rate of the thermoplastic composition may also be similar to that of the matrix polymer. For example, the melt flow rate of the composition (on a dry basis) may be from about 0.1 to about 70 grams per 10 minutes, in some embodiments from about 0.5 to about 50 grams per 10 minutes, and in some embodiments, from about 5 to about 25 grams per 10 minutes, determined at a load of 2160 grams and at a temperature of 190°C.

Compatibilizers may also be employed that improve interfacial adhesion and reduce the interfacial tension between the domain and the matrix, thus allowing the formation of smaller domains during mixing. Examples of suitable compatibilizers may include, for instance, copolymers functionalized with epoxy or maleic anhydride chemical moieties. An example of a maleic anhydride compatibilizer is polypropylene-grafted-maleic anhydride, which is commercially available from Arkema under the trade names Orevac™ 18750 and Orevac™ CA 100. When employed, compatibilizers may constitute from about 0.05 wt.% to about 10 wt.%, in some embodiments from about 0.1 wt.% to about 8 wt.%, and in some embodiments, from about 0.5 wt.% to about 5 wt.% of the thermoplastic composition, based on the weight of the continuous phase matrix.

Other suitable materials that may also be used in the thermoplastic composition, such as catalysts, antioxidants, stabilizers, surfactants, waxes, solid solvents, fillers, nucleating agents (e.g., calcium carbonate, etc.), particulates, and other materials added to enhance the processability and mechanical properties of the thermoplastic composition. Nevertheless, one beneficial aspect of the present invention is that good properties may be provided without the need for various conventional additives, such as blowing agents (e.g., chlorofluorocarbons, hydrochlorofluorocarbons, hydrocarbons, carbon dioxide, supercritical carbon dioxide, nitrogen, etc.) and plasticizers (e.g., solid or semi-solid polyethylene glycol). In fact, the thermoplastic composition may be generally free of blowing agents and/or plasticizers. For example, blowing agents and/or plasticizers may be present in an amount of no more than about 1 wt.%, in some embodiments no more than about 0.5 wt.%, and in some embodiments, from about 0.001 wt.% to about 0.2 wt.% of the thermoplastic composition. Further, due to its stress whitening properties, as described in more detail below, the resulting composition

may achieve an opaque color (e.g., white) without the need for conventional pigments, such as titanium dioxide. In certain embodiments, for example, pigments may be present in an amount of no more than about 1 wt.%, in some embodiments no more than about 0.5 wt.%, and in some embodiments, from about 0.001 wt.% to about 0.2 wt.% of the thermoplastic composition.

II. Fibers

Fibers formed from the thermoplastic composition may generally have any desired configuration, including monocomponent and multicomponent (e.g., sheath-core configuration, side-by-side configuration, segmented pie configuration, island-in-the-sea configuration, and so forth). In some embodiments, the fibers may contain one or more additional polymers as a component (e.g., bicomponent) or constituent (e.g., biconstituent) to further enhance strength and other mechanical properties. For instance, the thermoplastic composition may form a sheath component of a sheath/core bicomponent fiber, while an additional polymer may form the core component, or *vice versa.* The additional polymer may be a thermoplastic polymer such as polyesters, e.g., polylactic acid, polyethylene terephthalate, polybutylene terephthalate, and so forth; polyolefins, e.g., polyethylene, polypropylene, polybutylene, and so forth; polytetrafluoroethylene; polyvinyl acetate; polyvinyl chloride acetate; polyvinyl butyral; acrylic resins, e.g., polyacrylate, polymethylacrylate, polymethylmethacrylate, and so forth; polyamides, e.g., nylon; polyvinyl chloride; polyvinylidene chloride; polystyrene; polyvinyl alcohol; and polyurethanes.

Any of a variety of processes may be used to form fibers in accordance with the present invention. For example, the thermoplastic composition described above may be extruded through a spinneret and quenched. Referring to Fig. 1, for example, one embodiment of a method for forming fibers is shown in more detail. In this particular embodiment, the thermoplastic composition of the present invention may be fed into an extruder 12 from a hopper 14. To form the initial thermoplastic composition, the components are typically blended together using any of a variety of known techniques. In one embodiment, for example, the components may be supplied separately or in combination. For instance, the components may first be dry mixed together to form an essentially homogeneous dry mixture, and they may likewise be supplied either simultaneously or in sequence to a melt processing device that dispersively blends the materials. Batch and/or continuous melt processing techniques may be employed. For example, a mixer/kneader, Banbury mixer, Farrel continuous mixer, single-screw extruder, twin-screw extruder, roll mill, etc., may be utilized to blend and melt process the materials. Particularly suitable melt processing devices may be a co-rotating, twin-screw extruder (e.g., ZSK-30 extruder available from Werner & Pfleiderer Corporation of Ramsey, New Jersey or a Thermo Prism™ USALAB 16 extruder available from Thermo Electron Corp., Stone, England). Such extruders may include feeding and venting ports and provide high intensity distributive and dispersive mixing. For example, the components may be fed to the same or different feeding ports of the twin-screw extruder and melt blended to form a substantially homogeneous melted mixture. If desired, other additives may also be injected into the polymer melt and/or separately fed into the extruder at a different point along its length.

Regardless of the particular processing technique chosen, the resulting melt blended composition may contain micro-scale domains of the microinclusion additive and nano-scale domains of the nanoinclusion additive as described above. The degree of shear/pressure and heat may be controlled to ensure sufficient dispersion, but not so high as to adversely reduce the size of the domains so that they are incapable of achieving the desired properties. For example, blending typically occurs at a temperature of from about 180°C to about 300°C, in some embodiments from about 185°C to about 250°C, and in some embodiments, from about 190°C to about 240°C. Likewise, the apparent shear rate during melt processing may range from about 10 seconds$^{-1}$ to about 3000 seconds$^{-1}$, in some embodiments from about 50 seconds$^{-1}$ to about 2000 seconds$^{-1}$, and in some embodiments, from about 100 seconds$^{-1}$ to about 1200 seconds$^{-1}$. The apparent shear rate may be equal to $4Q/\pi R^3$, where Q is the volumetric flow rate ("$m^3/s$") of the polymer melt and R is the radius ("m") of the capillary (e.g., extruder die) through which the melted polymer flows. Of course, other variables, such as the residence time during melt processing, which is inversely proportional to throughput rate, may also be controlled to achieve the desired degree of homogeneity.

To achieve the desired shear conditions (e.g., rate, residence time, shear rate, melt processing temperature, etc.), the speed of the extruder screw(s) may be selected with a certain range. Generally, an increase in product temperature is observed with increasing screw speed due to the additional mechanical energy input into the system. For example, the screw speed may range from about 50 to about 600 revolutions per minute ("rpm"), in some embodiments from about 70 to about 500 rpm, and in some embodiments, from about 100 to about 300 rpm. This may result in a temperature that is sufficiently high to disperse the microinclusion additive without adversely impacting the size of the resulting domains. The melt shear rate, and in turn the degree to which the additives are dispersed, may also be increased through the use of one or more distributive and/or dispersive mixing elements within the mixing section of the extruder. Suitable distributive mixers for single screw extruders may include, for instance, Saxon, Dulmage, Cavity Transfer mixers, etc. Likewise, suitable dispersive mixers may include Blister ring, Leroy/Maddock, CRD mixers, etc. As is well known in the art, the mixing may be further improved by using pins in the barrel that create a folding and reorientation of the

polymer melt, such as those used in Buss Kneader extruders, Cavity Transfer mixers, and Vortex Intermeshing Pin (VIP) mixers.

Referring again to Fig. 1, the extruder 12 may be heated to a temperature sufficient to extrude the melted polymer. The extruded composition is then passed through a polymer conduit 16 to a spinneret 18. For example, the spinneret 18 may include a housing containing a spin pack having a plurality of plates stacked one on top of each other and having a pattern of openings arranged to create flow paths for directing polymer components. The spinneret 18 also has openings arranged in one or more rows. The openings form a downwardly extruding curtain of filaments when the polymers are extruded therethrough. The process 10 also employs a quench blower 20 positioned adjacent the curtain of fibers extending from the spinneret 18. Air from the quench air blower 20 quenches the fibers extending from the spinneret 18. The quench air may be directed from one side of the fiber curtain as shown in Fig. 1 or both sides of the fiber curtain.

To form a fiber with the desired length, the quenched fibers are generally melt drawn, such as using a fiber draw unit 22 as shown in Fig. 1. Fiber draw units or aspirators for use in melt spinning polymers are well-known in the art. Suitable fiber draw units for use in the process of the present invention include a linear fiber aspirator of the type shown in U.S. Patent Nos. 3,802,817 and 3,423,255. The fiber draw unit 22 generally includes an elongated vertical passage through which the fibers are drawn by aspirating air entering from the sides of the passage and flowing downwardly through the passage. A heater or blower 24 supplies aspirating air to the fiber draw unit 22. The aspirating air draws the fibers and ambient air through the fiber draw unit 22. The flow of gas causes the fibers to draw or attenuate which increases the molecular orientation or crystallinity of the polymers forming the fibers. When employing a fiber draw unit, the "draw down" ratio may be selected to help achieve the desired fiber length. The "drawn down" ratio is the linear speed of the fibers after drawing (e.g., linear speed of the godet roll 42 or a foraminous surface (not shown) divided by the linear speed of the fibers after extrusion). For example, the draw down ratio during melt drawing may be calculated as follows:

$$\text{Draw Down Ratio} = A/B$$

wherein,

*A* is the linear speed of the fiber after melt drawing (e.g., godet speed) and is directly measured; and
*B* is the linear speed of the extruded fiber and can be calculated as follows:

$$\text{Extruder linear fiber speed} = C/(25*\pi*D*E^2)$$

wherein,
*C* is the throughput through a single hole (grams per minute);
*D* is the melt density of the polymer (grams per cubic centimeter); and
*E* is the diameter of the orifice (in centimeters) through which the fiber is extruded. In certain embodiments, the draw down ratio may be from about 20:1 to about 4000:1, in some embodiments from about 25:1 to about 2000:1, and in some embodiments, from about 50:1 to about 1000:1 and in some embodiments from about 75:1 to about 800:1.

Once formed, the fibers may be deposited through the outlet opening of the fiber draw unit 22 and onto a godet roll 42. If desired, the fibers collected on the godet roll 42 may optionally be subjected to additional in line processing and/or converting steps (not shown) as will be understood by those skilled in the art. For example, fibers may be collected and thereafter crimped, texturized, and/or and cut to an average fiber length in the range of from about 3 to about 80 millimeters, in some embodiments from about 4 to about 65 millimeters, and in some embodiments, from about 5 to about 50 millimeters.

Regardless of the particular manner in which the fibers are formed, the desired porous network may be formed by drawing the resulting fibers in a subsequent step, or during formation of the fibers. Various drawing techniques may be employed, such as aspiration (e.g., fiber draw units), tensile frame drawing, biaxial drawing, multi-axial drawing, profile drawing, vacuum drawing, etc. The degree of drawing depends in part of the nature of the material being drawn, but is generally selected to ensure that the desired porous network is achieved. For instance, the fibers may be drawn (e.g., in the machine direction) to a draw ratio of from about 1.1 to about 3.5, in some embodiments from about 1.2 to about 3.0, and in some embodiments, from about 1.3 to about 2.5. The draw ratio may be determined by dividing the length of the drawn material by its length before drawing. The draw rate may also vary to help achieve the desired properties, such as within the range of from about 5% to about 1500% per minute of deformation, in some embodiments from about 20% to about 1000% per minute of deformation, and in some embodiments, from about 25% to about 850%

per minute of deformation. The fibers may be kept at a temperature below the glass temperature of the matrix polymer and microinclusion additive during drawing. Among other things, this helps to ensure that the polymer chains are not altered to such an extent that the porous network becomes unstable. For example, the fibers may be drawn at a temperature that is at least about 10°C, in some embodiments at least about 20°C, and in some embodiments, at least about 30°C below the glass transition temperature of the matrix polymer. For example, the fibers may be drawn at a temperature of from about 0°C to about 50°C, in some embodiments from about 15°C to about 40°C, and in some embodiments, from about 20°C to about 30°C. If desired, the composition is drawn without the application of external heat (e.g., heated rolls).

Drawing in the manner described above results in the formation of pores that have a relatively small cross-sectional dimension in the direction of drawing (e.g., longitudinal or machine direction). For instance, pores are formed that have a "nano-scale" dimension ("nanopores"). The nanopores have an average cross-sectional dimension of 800 nanometers or less, in some embodiments from about 1 to about 500 nanometers, in some embodiments from about 5 to about 450 nanometers, in some embodiments from about 5 to about 400 nanometers, and in some embodiments, from about 10 to about 100 nanometers. Micropores may also be formed at and around the micro-scale domains during drawing that have an average cross-sectional dimension of from 1 to 30 micrometers, in some embodiments from 1 to about 20 micrometers, and in some embodiments, from about 2 micrometers to about 15 micrometers. The micropores and/or nanopores may have any regular or irregular shape, such as spherical, elongated, etc. In certain cases, the axial dimension of the micropores and/or nanopores may be larger than the cross-sectional dimension so that the aspect ratio (the ratio of the axial dimension to the cross-sectional dimension) is from about 1 to about 30, in some embodiments from about 1.1 to about 15, and in some embodiments, from about 1.2 to about 5. The "axial dimension" is the dimension in the direction of the major axis (e.g., length), which is typically in the direction of drawing.

The present inventors have also discovered that the pores (e.g., micropores, nanopores, or both) can be distributed in a substantially homogeneous fashion throughout the material. For example, the pores may be distributed in columns that are oriented in a direction generally perpendicular to the direction in which a stress is applied. These columns may be generally parallel to each other across the width of the material. Without intending to be limited by theory, it is believed that the presence of such a homogeneously distributed porous network can result in a high thermal resistance as well as good mechanical properties (e.g., energy dissipation under load and impact strength). This is in stark contrast to conventional techniques for creating pores that involve the use of blowing agents, which tend to result in an uncontrolled pore distribution and poor mechanical properties. Notably, the formation of the porous network by the process described above does not necessarily result in a substantial change in the cross-sectional size (e.g., width) of the material. In other words, the material is not substantially necked, which may allow the material to retain a greater degree of strength properties.

In addition to forming a porous network, drawing can also significantly increase the axial dimension of the micro-scale domains so that they have a generally linear, elongated shape. For example, the elongated micro-scale domains may have an average axial dimension that is about 10% or more, in some embodiments from about 20% to about 500%, and in some embodiments, from about 50% to about 250% greater than the axial dimension of the domains prior to drawing. The axial dimension after drawing may, for instance, range from about 0.5 to about 250 micrometers, in some embodiments from about 1 to about 100 micrometers, in some embodiments from about 2 to about 50 micrometers, and in some embodiments, from about 5 to about 25 micrometers. The micro-scale domains may also be relatively thin and thus have a small cross-sectional dimension. For instance, the cross-sectional dimension may be from about 0.05 to about 50 micrometers, in some embodiments from about 0.2 to about 10 micrometers, and in some embodiments, from 0.5 to about 5 micrometers. This may result in an aspect ratio for the first domains (the ratio of the axial dimension to the cross-sectional dimension) of from about 2 to about 150, in some embodiments from about 3 to about 100, and in some embodiments, from about 4 to about 50.

As a result of the porous and elongated domain structure, the present inventors have discovered that the resulting fibers can expand uniformly in volume when drawn in longitudinal direction, which is reflected by a low "Poisson coefficient", as determined according to the following equation:

$$\text{Poisson coefficient} = -E_{transverse} / E_{longitudinal}$$

where $E_{transverse}$ is the transverse deformation of the material and $E_{longitudinal}$ is the longitudinal deformation of the material. More particularly, the Poisson coefficient of the material can be approximately 0 or even negative. For example, the Poisson coefficient may be about 0.1 or less, in some embodiments about 0.08 or less, and in some embodiments, from about -0.1 to about 0.04. When the Poisson coefficient is zero, there is no contraction in transverse direction when the material is expanded in the longitudinal direction. When the Poisson coefficient is negative, the transverse or lateral dimensions of the material are also expanding when the material is drawn in the longitudinal direction. Materials having

a negative Poisson coefficient can thus exhibit an increase in width when drawn in the longitudinal direction, which can result in increased energy absorption in the cross direction.

The resulting fibers can have excellent mechanical properties for use in the fabric of the present invention. For instance, the fibers can deform upon the application of strain, rather than fracture. The fibers may thus continue to function as a load bearing member even after the fiber has exhibited substantial elongation. In this regard, the fibers are capable of exhibiting improved "peak elongation properties, i.e., the percent elongation of the fiber at its peak load. For example, the fibers of the present invention may exhibit a peak elongation of about 50% or more, in some embodiments about 100% or more, in some embodiments from about 200% to about 1500%, and in some embodiments, from about 400% to about 800%, such as determined in accordance with ASTM D638-10 at 23°C. Such elongations may be achieved for fibers having a wide variety of average diameters, such as those ranging from about 0.1 to about 50 micrometers, in some embodiments from about 1 to about 40 micrometers, in some embodiments from about 2 to about 25 micrometers, and in some embodiments, from about 5 to about 15 micrometers.

While possessing the ability to extend under strain, the fibers can also remain relatively strong. For example, the fibers may exhibit a peak tensile stress of from about 25 to about 500 Megapascals ("MPa"), in some embodiments from about 50 to about 300 MPa, and in some embodiments, from about 60 to about 200 MPa, such as determined in accordance with ASTM D638-10 at 23°C. Another parameter that is indicative of the relative strength of the fibers of the present invention is "tenacity", which indicates the tensile strength of a fiber expressed as force per unit linear density. For example, the fibers of the present invention may have a tenacity of from about 0.75 to about 6.0 grams-force ("$g_f$") per denier, in some embodiments from about 1.0 to about 4.5 $g_f$ per denier, and in some embodiments, from about 1.5 to about 4.0 $g_f$ per denier. The denier of the fibers may vary depending on the desired application. Typically, the fibers are formed to have a denier per filament (i.e., the unit of linear density equal to the mass in grams per 9000 meters of fiber) of less than about 6, in some embodiments less than about 3, and in some embodiments, from about 0.5 to about 3.

If desired, the fibers may be subjected to one or more additional processing steps, before and/or after being drawn. Examples of such processes include, for instance, groove roll drawing, embossing, coating, etc. In certain embodiments, the fibers may also be annealed to help ensure that it retains the desired shape. Annealing typically occurs at or above the glass transition temperature of the polymer matrix, such as at from about 40° to about 120°C, in some embodiments from about 50°C to about 100°C, and in some embodiments, from about 70°C to about 90°C. The fibers may also be surface treated using any of a variety of known techniques to improve its properties. For example, high energy beams (e.g., plasma, x-rays, e-beam, etc.) may be used to remove or reduce any skin layers, to change the surface polarity, porosity, topography, to embrittle a surface layer, etc. If desired, such surface treatment may be used before and/or drawing.

## III. Fabric Construction

The entire fabric may be formed from the fibers, or the fabric may be a composite of which the fibers are used in a component and/or a laminate in which the fibers are used in a layer. In any event, the fabric may sometimes be a composite that employs additional material(s) in conjunction with the fibers of the present invention. Any of a variety of materials may generally be employed in combination with the fibers of the present invention as is known in the art. For instance, textile fibers may be used in certain embodiments. Particularly suitable textile fibers include generally inelastic textile fibers, such as those formed from cotton, wool, bast, silk, aromatic polyamides (e.g., Nomex® or Kevlar®), aliphatic polyamides (e.g., nylon), rayon, lyocell, etc.; elastic fibers, such as those formed from elastoesters (e.g., REXE™ from Teijin), lastol (e.g., Dow XLA™), spandex (e.g., Lycra® from DuPont), etc.; as well as combinations of two or more types of textile fibers. "Spandex" is an elastic textile fiber formed from segmented polyurethane typically interspersed with relatively soft segments of polyethers, polyesters, polycarbonates, etc. Likewise, "elastoester" is an elastic textile fiber formed from a polyether/polyester blend and "lastol" is an elastic textile fiber formed from a crosslinked ethylene/$\alpha$-olefin copolymer. Elastic textile fibers are particularly suitable for employed to fabrics that have a stretch-like characteristic.

In one particular embodiment, for example, the fabric is a woven or knit composite that contains yarns formed from a combination of the fibers and textile fibers (e.g., elastic fibers). A stretchable composite fabric can, for instance, be formed from yarns formed from elastic textile fibers and yarns formed from fibers of the present invention, which may be relatively inelastic in nature. In a woven fabric, for instance, the elastic yarns may be oriented in the direction in that the stretch will exist, such as the filling yarn in weft stretch fabrics. Alternatively, the fabric can be formed from yarns that are themselves a composite of fibers of the present invention and textile fibers (e.g., elastic fibers). Stretchable composite yarns may, for instance, be formed by single or double wrapping of elastic fibers with a yarn formed from fibers of the present invention, covering (i.e., core spinning) of an elastic fiber with staple fibers formed according to the present invention, intermingling and entangling elastic yarns and yarns formed from the fibers of the present invention (e.g., with an air jet), twisting elastic fibers and yarns formed from fibers of the present invention, etc. Composite fabrics may also be formed that employ a combination of textile yarns and yarns formed from a blend of textile fibers and fibers of the present invention.

III. Articles

The fabric of the present inveniton may be employed in a wide variety of types of articles. Non-limiting examples of such articles include, for instance, building panels and sections (e.g., roofs, wall cavities, under floors, etc.); garments; furniture and bedding (e.g., sleeping bags, comforters, etc.); extreme environments (e.g., underwater or space); food and beverage products (e.g., cups, cup holders, plates, etc.); and so forth. As used herein, for instance, the term "garment" is generally meant to include any article that is shaped to fit over a portion of a body. Examples of such articles include, without limitation, clothing (e.g., shirts, pants, jeans, slacks, skirts, coats, activewear, athletic, aerobic, and exercise apparel, swimwear, cycling jerseys or shorts, swimsuit/bathing suit, race suit, wetsuit, bodysuit, etc.), footwear (e.g., shoes, socks, boots, etc.), protective apparel (e.g., firefighter's coat), clothing accessories (e.g., belts, bra straps, side panels, gloves, hosiery, leggings, orthopedic braces, etc.), undergarments (e.g., underwear, t-shirts, etc.), compression garments, draped garments (e.g., kilts loincloths, togas, ponchos, cloaks, shawls, etc.), and so forth.

When employed in a garment, the fabric of the present invention may form the entire garment or simply be located within a portion or region of the garment. Referring to Fig. 2, for instance, one embodiment of a garment 200 (i.e., coat) that includes a body portion 220, sleeves 222, and a collar 224 attached to the body portion. In this particular embodiment, the garment 200 is formed from a laminate 202 that includes an outer layer 212 and an inner layer 214, which defines a body-facing surface 225. The outer layer 212 also includes a front closure 226 that includes snaps 228, or alternatively a slide fastener (not shown). If desired, the outer layer 212 and/or the inner layer 214 may be formed from the fabric of the present invention. Nevertheless, in certain embodiments, the outer shell 212 may be from another material, such as nylon, polyester, cotton, or blends thereof. In yet other embodiments, the garment 200 is formed entirely from the fabric of the present invention.

In yet other embodiments of the present invention, the fabric of the present invention may be used in footwear. The fabric may be used to form the entire footwear or simply as a liner. Referring to Figs. 3-4, for example, one embodiment of a liner 100 for a shoe is shown that may be formed from the fabric of the present invention. In this particular embodiment, the liner 100 contains an insulation layer 112, which may be formed form the fabric of the present invention, and which is encapsulated within support layers 114 and 116. Typically, the insulation layer 112 is die-cut and then disposed on an upper surface 113 of the first support layer 114. The liner 100 is completed by disposing the second support layer 116, having a wearing material 118 laminated on an upper surface 122 of a fibers layer 120, to define a body-facing surface 113. The periphery of the first and second support layers 114 and 116 may be hermetically sealed by a high frequency or ultrasonic welder for encapsulating the insulation layer 112. The liner 100 may also include a frontal region 125, which includes the upper and lower support layers bonded together without any insulating material 112 therebetween. This frontal region includes raised contour ridges 127 having cut lines along which the liner 100 can be trimmed to fit various sized shoes. In yet other embodiments, the thermal liner 100 is formed entirely from the fibers of the present invention.

In yet other embodiments of the present invention, the fabric of the present invention may be used in building insulation. For example, the fabric may be employed as a "housewrap" material that acts as an external sheathing for the building and is located adjacent to an external surface (e.g., wall, roof, etc.) of the building. For example, such materials may be applied to the external surface and/or to an exterior covering (e.g., siding, brick, stone, masonry, stucco, concrete veneers, etc.) prior to its installation and located adjacent thereto. Referring to Fig. 5, for instance, one embodiment is shown in which the building insulation is applied to the exterior wall. Typically, the building insulation is employed after the walls have been constructed and all sheathing and flashing details have been installed. The building insulation is preferably applied before doors and windows have been set inside framed openings and prior to the installation of the primary wall covering. In the illustrated embodiment, a first building insulation 300 is applied to the wall assembly 340. As shown, a roll of the insulation material may be unrolled. The building insulation 300 is secured to the exterior wall assembly 340 with fasteners, such as staples or cap nails. The building insulation may be trimmed around each framed opening with additional appropriate detailing applied as per window/door manufacturer and/or code standards. Once installed, an exterior covering may be applied/installed over the building insulation if so desired.

The fabric may be employed in a wide variety of articles within any particular application. For example, the fabric may be utilized in automotive applications. By way of example, fabric may be beneficially employed in articles that can enhance comfort and/or aesthetics of a vehicle (e.g., coverings and/or paddings for sun visors, speaker housings and coverings, seat coverings, seal slip agents, and backings for seat coverings, carpeting and carpet reinforcement including carpet backing, car mats and backings for car mats, coverings for seat belts, trunk floor coverings and liners, headliner facings and backings, upholstery backings, general decorative fabrics, etc.), materials that can provide general temperature and/or noise insulation (e.g., column padding, door trim pads, hood liners, general sound proofing and insulation materials, muffler wraps, etc.), and filtration/engine materials (e.g., fuel filters, oil filters, battery separators, cabin air filters, etc.).

The fabric can be beneficially utilized in a wide variety of fields. For instance, the fabric can be used in the transportation industry in general and is not limited to automotive applications. The fabric can be utilized in any transportation application including, without limitation, air and space applications (e.g., airplanes, helicopters, space transports, military aerospace devices, etc.), marine applications (boats, ships, recreational vehicles), trains, and so forth. The fabric can be utilized in transportation applications in any desired fashion, e.g., in aesthetic applications, for temperature and/or noise insulation, in filtration and/or engine components, in safety components, etc.

The present invention may be better understood with reference to the following examples.

Test Methods

*Hydrostatic Pressure Test ("Hydrohead"):*

The hydrostatic pressure test is a measure of the resistance of a material to penetration by liquid water under a static pressure and is performed in accordance with AATCC Test Method 127-2008. The results for each specimen may be averaged and recorded in centimeters (cm). A higher value indicates greater resistance to water penetration.

*Water Vapor Transmission Rate ("WVTR"):*

The test used to determine the WVTR of a material may vary based on the nature of the material. One technique for measuring the WVTR value is ASTM E96/96M-12, Procedure B. Another method involves the use of INDA Test Procedure IST-70.4 (01). The INDA test procedure is summarized as follows. A dry chamber is separated from a wet chamber of known temperature and humidity by a permanent guard film and the sample material to be tested. The purpose of the guard film is to define a definite air gap and to quiet or still the air in the air gap while the air gap is characterized. The dry chamber, guard film, and the wet chamber make up a diffusion cell in which the test film is sealed. The sample holder is known as the Permatran-W Model 100K manufactured by Mocon/Modem Controls, Inc., Minneapolis, Minnesota. A first test is made of the WVTR of the guard film and the air gap between an evaporator assembly that generates 100% relative humidity. Water vapor diffuses through the air gap and the guard film and then mixes with a dry gas flow that is proportional to water vapor concentration. The electrical signal is routed to a computer for processing. The computer calculates the transmission rate of the air gap and the guard film and stores the value for further use.

The transmission rate of the guard film and air gap is stored in the computer as CalC. The sample material is then sealed in the test cell. Again, water vapor diffuses through the air gap to the guard film and the test material and then mixes with a dry gas flow that sweeps the test material. Also, again, this mixture is carried to the vapor sensor. The computer then calculates the transmission rate of the combination of the air gap, the guard film, and the test material. This information is then used to calculate the transmission rate at which moisture is transmitted through the test material according to the equation:

$$TR^{-1}_{test\ material} = TR^{-1}_{test\ material, guardfilm, airgap} - TR^{-1}_{guardfilm,\ airgap}$$

The water vapor transmission rate ("WVTR") is then calculated as follows:

$$WVTR = \frac{F\rho_{sat(T)}RH}{AP_{sat(T)}(1-RH)}$$

wherein,

F = the flow of water vapor in $cm^3$ per minute;
$\rho_{sat(T)}$ = the density of water in saturated air at temperature T;
RH = the relative humidity at specified locations in the cell;
A = the cross sectional area of the cell; and
$P_{sat(T)}$ = the saturation vapor pressure of water vapor at temperature T.

*Conductive Properties:*

Thermal conductivity (W/mK) and thermal resistance ($m^2K/W$) may be determined in accordance with ASTM E-1530-11 ("Resistance to Thermal Transmission of Materials by the Guarded Heat Flow Meter Technique") using an Anter Unitherm Model 2022 tester. The target test temperature may be 25°C and the applied load may be 0.17 MPa. Prior to testing, the samples may be conditioned for 40+ hours at a temperature of 23°C (±2°C) and relative humidity of 50% (±10%). Thermal admittance ($W/m^2K$) may also be calculated by dividing 1 by the thermal resistance.

*Melt Flow Rate:*

The melt flow rate ("MFR") is the weight of a polymer (in grams) forced through an extrusion rheometer orifice (0.0825-inch diameter) when subjected to a load of 2160 grams in 10 minutes, typically at 190°C, 210°C, or 230°C. Unless otherwise indicated, melt flow rate is measured in accordance with ASTM Test Method D1239 with a Tinius Olsen Extrusion Plastometer.

*Thermal Properties:*

The glass transition temperature ($T_g$) may be determined by dynamic mechanical analysis (DMA) in accordance with ASTM E1640-09. A Q800 instrument from TA Instruments may be used. The experimental runs may be executed in tension/tension geometry, in a temperature sweep mode in the range from -120°C to 150°C with a heating rate of 3°C/min. The strain amplitude frequency may be kept constant (2 Hz) during the test. Three (3) independent samples may be tested to get an average glass transition temperature, which is defined by the peak value of the tan $\delta$ curve, wherein tan $\delta$ is defined as the ratio of the loss modulus to the storage modulus (tan $\delta$ = E"/E').

The melting temperature may be determined by differential scanning calorimetry (DSC). The differential scanning calorimeter may be a DSC Q100 Differential Scanning Calorimeter, which may be outfitted with a liquid nitrogen cooling accessory and with a UNIVERSAL ANALYSIS 2000 (version 4.6.6) analysis software program, both of which are available from T.A. Instruments Inc. of New Castle, Delaware. To avoid directly handling the samples, tweezers or other tools may be used. The samples may be placed into an aluminum pan and weighed to an accuracy of 0.01 milligram on an analytical balance. A lid may be crimped over the material sample onto the pan. Typically, the resin pellets may be placed directly in the weighing pan.

The differential scanning calorimeter may be calibrated using an indium metal standard and a baseline correction may be performed, as described in the operating manual for the differential scanning calorimeter. A material sample may be placed into the test chamber of the differential scanning calorimeter for testing, and an empty pan may be used as a reference. All testing may be run with a 55-cubic centimeter per minute nitrogen (industrial grade) purge on the test chamber. For resin pellet samples, the heating and cooling program is a 2-cycle test that began with an equilibration of the chamber to -30°C, followed by a first heating period at a heating rate of 10°C per minute to a temperature of 200°C, followed by equilibration of the sample at 200°C for 3 minutes, followed by a first cooling period at a cooling rate of 10°C per minute to a temperature of -30°C, followed by equilibration of the sample at -30°C for 3 minutes, and then a second heating period at a heating rate of 10°C per minute to a temperature of 200°C. For fiber samples, the heating and cooling program may be a 1-cycle test that begins with an equilibration of the chamber to -25°C, followed by a heating period at a heating rate of 10°C per minute to a temperature of 200°C, followed by equilibration of the sample at 200°C for 3 minutes, and then a cooling period at a cooling rate of 10°C per minute to a temperature of -30°C. All testing may be run with a 55-cubic centimeter per minute nitrogen (industrial grade) purge on the test chamber.

The results may be evaluated using the UNIVERSAL ANALYSIS 2000 analysis software program, which identifies and quantifies the glass transition temperature ($T_g$) of inflection, the endothermic and exothermic peaks, and the areas under the peaks on the DSC plots. The glass transition temperature may be identified as the region on the plot-line where a distinct change in slope occurred, and the melting temperature may be determined using an automatic inflection calculation.

*Tensile Properties:*

The tensile properties may be determined in accordance with ASTM 638-10 at 23°C. For instance, individual fiber specimens may initially be shortened (e.g., cut with scissors) to 38 millimeters in length, and placed separately on a black velvet cloth. 10 to 15 fiber specimens may be collected in this manner. The fiber specimens may then be mounted in a substantially straight condition on a rectangular paper frame having external dimension of 51 millimeters x 51 millimeters and internal dimension of 25 millimeters x 25 millimeters. The ends of each fiber specimen may be operatively attached to the frame by carefully securing the fiber ends to the sides of the frame with adhesive tape. Each fiber specimen may be measured for its external, relatively shorter, cross-fiber dimension employing a conventional laboratory microscope, which may be properly calibrated and set at 40X magnification. This cross-fiber dimension may be recorded as the diameter of the individual fiber specimen. The frame helps to mount the ends of the sample fiber specimens in the upper and lower grips of a constant rate of extension type tensile tester in a manner that avoids excessive damage to the fiber specimens.

A constant rate of extension type of tensile tester and an appropriate load cell may be employed for the testing. The load cell may be chosen (e.g., 10N) so that the test value falls within 10-90% of the full scale load. The tensile tester (i.e., MTS SYNERGY 200) and load cell may be obtained from MTS Systems Corporation of Eden Prairie, Michigan. The fiber specimens in the frame assembly may then be mounted between the grips of the tensile tester such that the

ends of the fibers may be operatively held by the grips of the tensile tester. Then, the sides of the paper frame that extend parallel to the fiber length may be cut or otherwise separated so that the tensile tester applies the test force only to the fibers. The fibers may be subjected to a pull test at a pull rate and grip speed of 12 inches (30 cm) per minute. The resulting data may be analyzed using a TESTWORKS 4 software program from the MTS Corporation with the following test settings:

| Calculation Inputs | | Test Inputs | |
|---|---|---|---|
| Break mark drop | 50% | Break sensitivity | 90% |
| Break marker elongation | 0.1 in (0.25cm) | Break threshold | 10 $g_f$ |
| Nominal gage length | 1 in (2.5cm) | Data Acq. Rate | 10 Hz |
| Slack pre-load | 1 $lb_f$ (4N) | Denier length | 9000 m |
| Slope segment length | 20% | Density | 1.25 g/cm$^3$ |
| Yield offset | 0.20% | Initial speed | 12 in/min (30cm/min) |
| Yield segment length | 2% | Secondary speed | 2 in/min (5cm/min) |

The tenacity values may be expressed in terms of gram-force per denier. Peak elongation (% strain at break) and peak stress may also be measured.

*Expansion Ratio, Density, and Percent Pore Volume:*

To determine expansion ratio, density, and percent pore volume, the width ($W_i$) and thickness ($T_i$) of the specimen may be initially measured prior to drawing. The length ($L_i$) before drawing may also be determined by measuring the distance between two markings on a surface of the specimen. Thereafter, the specimen may be drawn to initiate voiding. The width ($W_f$), thickness ($T_f$), and length ($L_f$) of the specimen may then be measured to the nearest 0.01 mm utilizing Digimatic Caliper (Mitutoyo Corporation). The volume ($V_i$) before drawing may be calculated by $W_i$ x $T_i$ x $L_i$ = $V_i$. The volume ($V_f$) after drawing may also be calculated by $W_f$ x $T_f$ x $L_f$ = $V_f$. The expansion ratio ($\Phi$) may be calculated by $\Phi = V_f/V_i$; the density ($P_f$) of was calculated by: $P_f = P_i/\Phi$, where $P_i$ is density of precursor material; and the percent pore volume (% $V_v$) may be calculated by: $\%V_v = (1 - 1/\Phi) \times 100$.

*Moisture Content:*

Moisture content may be determined using an Arizona Instruments Computrac Vapor Pro moisture analyzer (Model No. 3100) in substantial accordance with ASTM D 7191-05. The test temperature (§X2.1.2) may be 130°C, the sample size (§X2.1.1) may be 2 to 4 grams, and the vial purge time (§X2.1.4) may be 30 seconds. Further, the ending criteria (§X2.1.3) may be defined as a "prediction" mode, which means that the test is ended when the built-in programmed criteria (which mathematically calculates the end point moisture content) is satisfied.

**EXAMPLE 1 (Reference)**

The ability to form fibers for use in a fabric was demonstrated. Initially, a blend of 85.3 wt.% polylactic acid (PLA 6201D, Natureworks®), 9.5 wt.% of a microinclusion additive, 1.4 wt.% of a nanoinclusion additive, and 3.8 wt.% interfacial modifier (PLURIOL® WI 285 from BASF) was spun into fibers. The microinclusion additive was Vistamaxx™ 2120 (ExxonMobil), which is a polyolefin copolymer/elastomer with a melt flow rate of 29 g/10 min (190°C, 2160 g) and a density of 0.866 g/cm$^3$. The nanoinclusion additive was poly(ethylene-co-methyl acrylate-co-glycidyl methacrylate) (Lotader® AX8900, Arkema) having a melt flow rate of 70-100 g/10 min (190°C/2160 g), a glycidyl methacrylate content of 7 to 11 wt.%, methyl acrylate content of 13 to 17 wt.%, and ethylene content of 72 to 80 wt.%. The polymers were fed into a co-rotating, twin-screw extruder (ZSK-30, diameter of 30 mm, length of 1328 millimeters) for compounding that was manufactured by Werner and Pfleiderer Corporation of Ramsey, New Jersey. The extruder possessed 14 zones, numbered consecutively 1-14 from the feed hopper to the die. The first barrel zone #1 received the resins *via* gravimetric feeder at a total throughput of 15 pounds (6.8kg) per hour with the PLURIOL® WI285 was added via injector pump into barrel zone #2. The die used to extrude the resin had 3 die openings (6 millimeters in diameter) that were separated by 4 millimeters. Upon formation, the extruded resin was cooled on a fan-cooled conveyor belt and formed into pellets by a Conair pelletizer. The extruder screw speed was 200 revolutions per minute ("rpm"). The pellets were then flood fed into a single screw extruder at 240°C, melted and passed through a melt pump at a rate of 0.40 grams

per hole per minute through a 0.6 mm diameter spinneret.

Fibers were collected in free fall (gravity only as draw force) and then tested for mechanical properties at a pull rate of 50 millimeters per minute. Fibers were then cold drawn at 23°C in a MTS Synergie Tensile frame at a rate of 50 mm/min. Fibers were drawn to pre-defined strains of 50%, 100%, 150%, 200% and 250%. After drawing, the expansion ratio, void volume and density were calculated for various strain rates as shown in the tables below.

| Initial Length (mm) | Initial Diameter (mm) | Initial Volume (mm^3) | Strain % | Length after elongation (mm) | Diameter after elongation (mm) | Volume after elongation (mm^3) |
|---|---|---|---|---|---|---|
| 50 | 0.1784 | 1.2498 | 50.0 | 75 | 0.1811 | 1.9319 |
| 50 | 0.2047 | 1.6455 | 100.0 | 100 | 0.2051 | 3.3039 |
| 50 | 0.1691 | 1.1229 | 150.0 | 125 | 0.165 | 2.6728 |
| 50 | 0.242 | 2.2998 | 200.0 | 150 | 0.1448 | 2.4701 |
| 50 | 0.1795 | 1.2653 | 250.0 | 175 | 0.1062 | 1.5502 |

| Strain % | Poisson's Coefficient | Expansion Ratio | Void Volume (%) | Initial Density (g/cc) | Voided Density (g/cc) | Observation |
|---|---|---|---|---|---|---|
| 50 | -0.030 | 1.55 | 35.3 | 1.2 | 0.78 | No necking |
| 100 | -0.002 | 2.01 | 50.2 | 1.2 | 0.60 | No necking |
| 125 | 0.016 | 2.38 | 58.0 | 1.2 | 0.50 | No necking |
| 150 | 0.201 | 1.07 | 6.9 | 1.2 | 1.12 | necking |
| 175 | 0.163 | 1.23 | 18.4 | 1.2 | 0.98 | fully necked |

**EXAMPLE 2 (Reference)**

Fibers were formed as described in Example 1, except that they were collected at a collection roll speed of 100 meters per minute resulting in a drawn down ratio of 77. Fibers were then tested for mechanical properties at a pull rate of 50 millimeters per minute. Fibers were then cold drawn at 23°C in a MTS Synergie Tensile frame at a rate of 50 mm/min. Fibers were drawn to pre-defined strains of 50%, 100%, 150%, 200% and 250%. After drawing, the expansion ratio, void volume and density were calculated for various strain rates as shown in the tables below.

| Initial Length (mm) | Initial Diameter (mm) | Initial Volume (mm^3) | Strain % | Length after elongation (mm) | Diameter after elongation (mm) | Volume after elongation (mm^3) |
|---|---|---|---|---|---|---|
| 50 | 0.057 | 0.1276 | 50.0 | 75 | 0.0575 | 0.1948 |
| 50 | 0.0601 | 0.1418 | 100.0 | 100 | 0.0609 | 0.2913 |
| 50 | 0.067 | 0.1763 | 150.0 | 125 | 0.0653 | 0.4186 |
| 50 | 0.0601 | 0.1418 | 200.0 | 150 | 0.058 | 0.3963 |
| 50 | 0.0601 | 0.1418 | 200.0 | 150 | 0.0363 | 0.1552 |
| 50 | 0.059 | 0.1367 | 250.0 | 175 | 0.0385 | 0.2037 |

| Strain % | Poisson's Coefficient | Expansion Ratio | Void Volume (%) | Initial Density (g/cc) | Voided Density (g/cc) | Observation |
|---|---|---|---|---|---|---|
| 50 | -0.018 | 1.53 | 34.5 | 1.2 | 0.79 | 1 small neck ~ 1mm in length |

(continued)

| Strain % | Poisson's Coefficient | Expansion Ratio | Void Volume (%) | Initial Density (g/cc) | Voided Density (g/cc) | Observation |
|---|---|---|---|---|---|---|
| 100 | -0.013 | 2.05 | 51.3 | 1.2 | 0.58 | 2 small necks approximately 5 mm in length |
| 150 | 0.017 | 2.37 | 57.9 | 1.2 | 0.51 | No visible necking - fiber looks to be uniform |
| 200 | 0.017 | 2.79 | 64.2 | 1.2 | 0.43 | Average diameter taken from necked and unnecked regions |
| 200 | 0.198 | 1.09 | 8.6 | 1.2 | 1.10 | Diameter only taken from necked region |
| 250 | 0.139 | 1.49 | 32.9 | 1.2 | 0.81 | Fully necked |

**EXAMPLE 3 (Reference)**

Fibers were formed as described in Example 1, except that the blend was composed of 83.7 wt.% polylactic acid (PLA 6201D, Natureworks®), 9.3 wt.% of Vistamaxx™ 2120, 1.4 wt.% Lotader® AX8900, 3.7% wt.% PLURIOL® WI 285, and 1.9% hydrophilic surfactant (Masil SF-19). The PLURIOL® WI285 and Masil SF-19 were premixed at a 2:1 (WI-285:SF-19) ratio and added via injector pump into barrel zone #2. Fibers were collected at 240°C, 0.40 ghm and under free fall.

**EXAMPLE 4 (Reference)**

Fibers were formed as described in Example 3, except that they were collected at a collection roll speed of 100 meters per minute resulting in a drawn down ratio of 77. Fibers were then tested for mechanical properties at a pull rate of 50 millimeters per minute. Fibers were then cold drawn at 23°C in a MTS Synergie Tensile frame at a rate of 50 mm/min. Fibers were drawn to pre-defined strain of 100%. After drawing, the expansion ratio, void volume and density were calculated as shown in the tables below.

| Example | Initial Length (mm) | Initial Diameter (mm) | Initial Volume (mm^3) | Strain % | Length after elongation (mm) | Diameter after elongation (mm) | Volume after elongation (mm^3) |
|---|---|---|---|---|---|---|---|
| 4 | 50 | 0.0626 | 0.1539 | 100.0 | 100 | 0.0493 | 0.1909 |

| Example | Poisson's Coefficient | Expansion Ratio | Void Volume (%) | Initial Density ($g/cm^3$) | Voided Density ($g/cm^3$) | Observation |
|---|---|---|---|---|---|---|
| 4 | 0.2125 | 1.24 | 19.4 | 1.2 | 0.97 | Localized necking throughout |

**EXAMPLE 5 (Reference)**

Fibers from Example 2 were stretched in a MTS Synergie Tensile frame at a rate of 50 millimeters per minute to 250% strain. This opened up the void structure and turned the fiber white. A one inch (2.5cm) sample was then cut from the stressed, white area of the fiber. The new fiber was then tested as described above. The density was estimated to be 0.75 grams per cubic centimeters and the pull rate for the tensile test was 305 mm/min.

**EXAMPLE 6 (Reference)**

Fibers from Example 2 were heated in an oven at 50°C for 30 minutes to anneal the fiber.

**EXAMPLE 7 (Reference)**

Fibers from Example 2 were heated in an oven at 90°C for 5 minutes to anneal the fiber and induce crystallization.

The fibers of Examples 1-7 were then tested for mechanical properties at a pull rate of 50 millimeters per minute. The results are set forth in the table below.

| Example | Diameter (μm) | Peak Load ($g_f$) | Peak Stress (MPa) | Strain at Break (%) | Energy to Break (J/cm^3) | Tenacity (g/g) | Density ($g/cm^3$) |
|---|---|---|---|---|---|---|---|
| Control PLA Fibers | 207.8 | 217.06 | 62.8 | 3.8 | 0.8 | 0.57 | 1.25 |
| 1 | 184.6 | 126.65 | 47.3 | 484.5 | 154.0 | 0.44 | 1.20 |
| 2 | 62.2 | 22.57 | 73.1 | 464.1 | 205.1 | 0.69 | 1.20 |
| 3 | 128.5 | 70.32 | 53.2 | 635.3 | 216.0 | 0.50 | 1.20 |
| 4 | 59.1 | 16.17 | 57.8 | 495.8 | 184.4 | 0.55 | 1.20 |
| 5 | 108.5 | 92.95 | 101.3 | 110.8 | 71.2 | 1.49 | ~0.75 |
| 6 | 67.5 | 24.48 | 66.9 | 467.7 | 195.2 | 0.63 | 1.20 |
| 7 | 62.6 | 19.55 | 62.2 | 351.0 | 154.4 | 0.59 | 1.20 |

**EXAMPLE 8**

The ability to form fibers for use in a fabric was demonstrated. Initially, a precursor blend was formed from 91.8 wt.% isotactic propylene homopolymer (M3661, melt flow rate of 14 g/10 at 210°C and melting temperature of 150°C, Total Petrochemicals), 7.4 wt.% polylactic acid (PLA 6252, melt flow rate of 70 to 85 g/10 min at 210°C, Natureworks®), and 0.7 wt.% of a polyepoxide. The polyepoxide was poly(ethylene-co-methyl acrylate-co-glycidyl methacrylate) (LOTADER® AX8900, Arkema) having a melt flow rate of 6 g/10 min (190°C/2160 g), a glycidyl methacrylate content of 8 wt.%, methyl acrylate content of 24 wt.%, and ethylene content of 68 wt.%. The components were compounded in a co-rotating twin-screw extruder (Werner and Pfleiderer ZSK-30 with a diameter of 30 mm and a L/D=44). The extruder had seven heating zones. The temperature in the extruder ranged from 180°C to 220°C. The polymer was fed gravimetrically to the extruder at the hoper at 15 pounds (6.8 kg) per hour and the liquid was injected into the barrel using a peristaltic pump. The extruder was operated at 200 revolutions per minute (RPM). In the last section of the barrel (front), a 3-hole die of 6 mm in diameter was used to form the extrudate. The extrudate was air-cooled in a conveyor belt and pelletized using a Conair Pelletizer.

Fiber was then produced from the precursor blend using a Davis-Standard fiber spinning line equipped with a 0.75-inch (1.9 cm) single screw extruder and 16 hole spinneret with a diameter of 0.6 mm. The fibers were collected at different draw down ratios. The take up speed ranged from 1 to 1000 m/min. The temperature of the extruder ranged from 175°C to 220°C. The fibers were stretched in a tensile tester machine at 300 mm/min up to 400% elongation at 25°C. To analyze the material morphology, the fibers were freeze fractured in liquid nitrogen and analyzed via Scanning Electron Microscope Jeol 6490LV at high vacuum. The results are shown in Fig. 6-8. As shown, spheroidal pores are formed that are elongated in the stretching direction. Both nanopores (~50 nanometers in width, ~500 nanometers in length) and micropores (~0.5 micrometers in width, ~4 micrometers in length) were formed.

While the invention has been described in detail with respect to the specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims and any equivalents thereto.

**Claims**

1. A fabric comprising a plurality of porous fibers, wherein the fibers are formed from a thermoplastic composition containing a continuous phase that includes a polyolefin matrix polymer, and further wherein a microinclusion additive and a nanoinclusion additive are dispersed within the continuous phase in the form of discrete domains, wherein a porous network is defined in the composition that includes a plurality of nanopores having an average cross-sectional

dimension of 800 nanometers or less;
wherein the microinclusion additive is selected from styrenic copolymers, polytetrafluoroethylenes, polyesters, polyvinyl acetates, polyvinyl alcohols, polyvinyl butyrals, acrylic resins, polyamides, polyvinyl chlorides, polyvinylidene chlorides, polystyrenes, and polyurethanes; and
wherein the nanoinclusion additive is present in the amount of from 0.05 to 10 wt.% of the thermoplastic composition, based on the weight of the continuous phase.

**2.** The fabric of claim 1, wherein the fabric exhibits a water vapor transmission rate of 300 g/$m^2$-24 hours or more, a thermal conductivity of from 0.02 to 0.10 watts per meter-kelvin, and/or a hydrohead value of 50 centimeters or more, determined in accordance with AATCC Test Method 127-2008.

**3.** The fabric of any of the foregoing claims, wherein the ratio of the solubility parameter for the matrix polymer to the solubility parameter of the microinclusion additive is from 0.5 to 1.5, the ratio of the melt flow rate for the matrix polymer to the melt flow rate of the microinclusion additive is from 0.2 to 8, and/or the ratio of the Young's modulus of elasticity of the matrix polymer to the Young's modulus of elasticity of the microinclusion additive is from 1 to 250.

**4.** The fabric of any of the foregoing claims, wherein the nanoinclusion additive is polymeric, preferably a functionalized polyolefin, such as a polyepoxide.

**5.** The fabric of any of the foregoing claims, wherein the microinclusion additive constitutes from 1 wt.% to 30 wt.% of the composition, based on the weight of the continuous phase; wherein the continuous phase constitutes from 60 wt.% to 99 wt.% of the thermoplastic composition; and/or wherein the nanoinclusion additive constitutes from 0.5 wt.% to 5 wt.% of the composition, based on the weight of the continuous phase.

**6.** The fabric of any of the foregoing claims, wherein the thermoplastic composition further comprises an interphase modifier, such as a silicone, a silicone-polyether copolymer, an aliphatic polyester, an aromatic polyester, an alkylene glycol, an alkane diol, an amine oxide, a fatty acid ester, or a combination thereof, preferably wherein the interphase modifier constitutes from 0.1 wt.% to 20 wt.% of the composition based on the weight of the continuous phase.

**7.** The fabric of claim 6, wherein the interphase modifier has a kinematic viscosity of from 0.7 to 200 centistokes, determined at a temperature of 40°C; and/or wherein the interphase modifier is hydrophobic.

**8.** The fabric of any of the foregoing claims, wherein the microinclusion additive is in the form of micro-scale domains and the nanoinclusion additive is in the form of nano-scale domains, wherein the nano-scale domains have an average cross-sectional dimension of from 1 nanometer to 500 nanometers.

**9.** The fabric of any of the foregoing claims, wherein the porous network further includes micropores and wherein the micropores have an average cross-sectional dimension of from 1 to 30 micrometers;

**10.** The fabric of claim 9 wherein the micropores have an aspect ratio of from 1 to 30.

**11.** The fabric of any of the foregoing claims, wherein the total pore volume of the fibers is from 15% to 80% per cubic centimeter;
wherein the nanopores constitute 20 vol.% or more of the total pore volume of the fibers; and/or wherein the thermoplastic composition has a density of 1.2 grams per cubic centimeter or less.

**12.** The fabric of any of the foregoing claims, wherein the fabric is a nonwoven fabric or a woven or knit fabric that contains a plurality of yarns, wherein at least a portion of the yarns includes the porous fibers.

**13.** The fabric of claim 12, wherein the fabric is a composite that further contains textile fibers, such as generally inelastic textile fibers and/or elastic textile fibers, such as elastoester, lastol, spandex, or a combination thereof.

**14.** The fabric of claim 13, wherein the composite includes yarns formed from a combination of the porous fibers and the textile fibers; and/or yarns formed from the porous fibers and yarns formed from the textile fibers.

**Patentansprüche**

1. Gewebe, umfassend eine Vielzahl von porösen Fasern, wobei die Fasern aus einer thermoplastischen Zusammensetzung ausgebildet sind, die eine kontinuierliche Phase enthält, die ein Polyolefin-Matrixpolymer beinhaltet, und ferner wobei ein Mikroeinschlusszusatz und ein Nanoeinschlusszusatz in der kontinuierlichen Phase in Form diskreter Bereiche verteilt sind, wobei ein poröses Netz in der Zusammensetzung definiert ist, das eine Vielzahl von Nanoporen beinhaltet, die eine durchschnittliche Querschnittsabmessung von etwa 800 Nanometern oder weniger aufweisen;
wobei der Mikroeinschlusszusatz aus Styrolcopolymeren, Polytetrafluorethylenen, Polyestern, Polyvinylacetaten, Polyvinylalkoholen, Polyvinylbutralen, Acrylharzen, Polyamiden, Polyvinylchloriden, Polyvinylidenchloriden, Polystyrenen und Polyurethanen ausgewählt wird; und
wobei der Nanoeinschlusszusatz in dem Betrag von 0,05 bis 10 Gewichts-% der thermoplastischen Zusammensetzung basierend auf dem Gewicht der kontinuierlichen Phase vorhanden ist.

2. Gewebe nach Anspruch 1, wobei das Gewebe eine Wasserdampfdurchlässigkeit von 300 g/$m^2$-24 Stunden oder mehr, eine thermische Leitfähigkeit von 0,02 bis 0,10 Watt pro Meter Kelvin und/oder einen Wassersäulen-Wert von 50 Zentimetern oder mehr aufweist, ermittelt gemäß dem AATCC-Prüfverfahren 127-2008.

3. Gewebe nach einem der vorhergehenden Ansprüche, wobei das Verhältnis des Löslichkeitsparameters für das Matrixpolymer zum Löslichkeitsparameter des Mikroeinschlusszusatzes von 0,5 bis 1,5 ist, das Verhältnis der Schmelzflussrate für das Matrixpolymer zur Schmelzflussrate des Mikroeinschlusszusatzes von 0,2 bis 8 ist und/oder das Verhältnis des Young'schen Elastizitätsmoduls des Matrixpolymers zum Young'schen Elastizitätsmodul des Mikroeinschlusszusatzes von 1 bis 250 ist.

4. Gewebe nach einem der vorhergehenden Ansprüche, wobei der Nanoeinschlusszusatz ein Polymer, bevorzugt ein funktionalisiertes Polyolefin, wie z. B. Polyepoxid, ist.

5. Gewebe nach einem der vorhergehenden Ansprüche, wobei der Mikroeinschlusszusatz von 1 Gewichts-% bis 30 Gewichts-% der Zusammensetzung basierend auf dem Gewicht der kontinuierlichen Phase darstellt; wobei die kontinuierliche Phase von 60 Gewichts-% bis 99 Gewichts-% der thermoplastischen Zusammensetzung darstellt; und/oder wobei der Nanoeinschlusszusatz von 0,5 Gewichts-% bis 5 Gewichts-% der Zusammensetzung basierend auf dem Gewicht der kontinuierlichen Phase darstellt.

6. Gewebe nach einem der vorhergehenden Ansprüche, wobei die thermoplastische Zusammensetzung ferner einen Interphasenmodifizierer umfasst, wie z. B. ein Silikon, ein Silikon-Polyether-Copolymer, ein aliphatisches Polyester, ein aromatisches Polyester, ein Alkylenglycol, ein Alkandiol, ein Aminoxid, ein Fettsäurerester oder eine Kombination davon, wobei der Interphasenmodifizierer bevorzugt von 0,1 Gewichts-% bis 20 Gewichts-% der Zusammensetzung basierend auf dem Gewicht der kontinuierlichen Phase darstellt.

7. Gewebe nach Anspruch 6, wobei der Interphasenmodifizierer eine kinematische Viskosität von 0,7 bis 200 Zentistoke aufweist, ermittelt bei einer Temperatur von 40 °C; und/oder wobei der Interphasenmodifizierer hydrophob ist.

8. Gewebe nach einem der vorhergehenden Ansprüche, wobei der Mikroeinschlusszusatz die Form von mikroskaligen Bereichen hat und der Nanoeinschlusszusatz die Form von nanoskaligen Bereichen hat, wobei die nanoskaligen Bereiche eine durchschnittliche Querschnittsabmessung von 1 Nanometer bis 500 Nanometern aufweisen.

9. Gewebe nach einem der vorhergehenden Ansprüche, wobei das poröse Netz ferner Mikroporen beinhaltet, und wobei die Mikroporen eine durchschnittliche Querschnittsabmessung von 1 bis 30 Mikrometern aufweisen;

10. Gewebe nach Anspruch 9, wobei die Mikroporen ein Seitenverhältnis von 1 bis 30 aufweisen.

11. Gewebe nach einem der vorhergehenden Ansprüche, wobei das gesamte Porenvolumen der Fasern von 15 % bis 80 % pro Kubikmeter beträgt;
wobei die Nanoporen 20 Volumen-% oder mehr des gesamten Porenvolumens der Fasern darstellen; und/oder wobei die thermoplastische Zusammensetzung eine Dichte von 1,2 Gramm pro Kubikzentimeter oder weniger aufweist.

12. Gewebe nach einem der vorhergehenden Ansprüche, wobei das Gewebe ein Vliesgewebe oder ein gewebtes oder

gestricktes Gewebe ist, das eine Vielzahl von Garnen beinhaltet, wobei mindestens ein Teil der Garne die porösen Fasern beinhaltet.

**13.** Gewebe nach Anspruch 12, wobei das Gewebe ein Verbundmaterial ist, das ferner Textilfasern enthält, wie z. B. allgemein unelastische Textilfasern und/oder elastische Textilfasern, wie z. B. Elastoester, Lastol oder Spandex oder eine Kombination davon.

**14.** Gewebe nach Anspruch 13, wobei das Verbundmaterial Garne beinhaltet, die aus einer Kombination der porösen Fasern und der Textilfasern ausgebildet sind; und/oder Garne, die aus den porösen Fasern und Garnen ausgebildet sind, die aus den Textilfasern ausgebildet sind.

**Revendications**

**1.** Étoffe comprenant une pluralité de fibres poreuses, dans laquelle les fibres sont formées à partir d'une composition thermoplastique contenant une phase continue qui comprend un polymère matriciel de polyoléfine, et dans laquelle un additif de micro-inclusion et un additif de nano-inclusion sont, en outre, dispersés dans la phase continue sous la forme de domaines discrets, dans laquelle un réseau poreux est défini dans la composition qui comprend une pluralité de nanopores ayant une dimension en coupe transversale moyenne d'environ 800 nanomètres ou moins ;
dans laquelle l'additif de micro-inclusion est choisi parmi des copolymères de styrène, polytétrafluoroéthylènes, polyesters, polyacétates de vinyle, polyalcools vinyliques, polybutyrals de vinyle, résines acryliques, polyamides, polychlorures de vinyle, polychlorures de vinylidène, polystyrènes et polyuréthanes ; et
dans laquelle l'additif de nano-inclusion est présent dans la quantité de 0,05 à 10 % en poids de la composition thermoplastique, sur la base du poids de la phase continue.

**2.** Étoffe selon la revendication 1, dans laquelle l'étoffe présente un débit de transmission de vapeur d'eau de 300 $g/m^2$/24 heures ou plus, une conductivité thermique de 0,02 à 0,10 watt par mètre par kelvin, et/ou une valeur de colonne d'eau de 50 centimètres ou plus, déterminée en conformité avec la méthode d'essai AATCC 127-2008.

**3.** Étoffe selon l'une quelconque des revendications précédentes, dans laquelle le rapport entre le paramètre de solubilité pour le polymère matriciel et le paramètre de solubilité de l'additif de micro-inclusion est de 0,5 à 1,5 ; le rapport entre l'indice de fluidité à chaud du polymère matriciel et l'indice de fluidité à chaud de l'additif de micro-inclusion est de 0,2 à 8, et/ou le rapport entre le module d'élasticité de Young du polymère matriciel et le module d'élasticité de Young de l'additif de micro-inclusion est de 1 à 250.

**4.** Étoffe selon l'une quelconque des revendications précédentes, dans laquelle l'additif de nano-inclusion est polymère, de préférence une polyoléfine fonctionnalisée, telle qu'un polyépoxyde.

**5.** Étoffe selon l'une quelconque des revendications précédentes, dans laquelle l'additif de micro-inclusion constitue de 1 % en poids à 30 % en poids de la composition, sur la base du poids de la phase continue ; dans laquelle la phase continue constitue de 60 % en poids à 99 % en poids de la composition thermoplastique ; et/ou dans laquelle l'additif de nano-inclusion constitue de 0,5 % en poids à 5 % en poids de la composition, sur la base du poids de la phase continue.

**6.** Étoffe selon l'une quelconque des revendications précédentes, dans laquelle la composition thermoplastique comprend en outre un modificateur d'interphase, tel qu'une silicone, un copolymère silicone-polyéther, un polyester aliphatique, un polyester aromatique, un alkylène glycol, un alcane diol, un oxyde d'aminé, un ester d'acide gras ou une combinaison de ceux-ci, de préférence dans laquelle le modificateur d'interphase constitue de 0,1 % en poids à 20 % en poids de la composition sur la base du poids de la phase continue.

**7.** Étoffe selon la revendication 6, dans laquelle le modificateur d'interphase présente une viscosité cinématique de 0,7 à 200 centistokes, déterminée à une température de 40 °C ; et/ou dans laquelle le modificateur d'interphase est hydrophobe.

**8.** Étoffe selon l'une quelconque des revendications précédentes, dans laquelle l'additif de micro-inclusion se présente sous la forme de domaines micrométriques et l'additif de nano-inclusion se présente sous la forme de domaines nanométriques, dans laquelle les domaines nanométriques ont une dimension en coupe transversale moyenne de 1 nanomètre à 500 nanomètres.

**9.** Étoffe selon l'une quelconque des revendications précédentes, dans laquelle le réseau poreux comprend en outre des micropores et dans laquelle les micropores ont une dimension en coupe transversale moyenne de 1 à 30 micromètres ;

**10.** Étoffe selon la revendication 9, dans laquelle les micropores ont un facteur de forme de 1 à 30.

**11.** Étoffe selon l'une quelconque des revendications précédentes, dans laquelle le volume de pores total des fibres est de 15 % à 80 % par centimètre cube ;
dans laquelle les nanopores constituent 20 % en volume ou plus du volume de pores total des fibres ; et/ou dans laquelle la composition thermoplastique a une masse volumique de 1,2 gramme par centimètre cube ou moins.

**12.** Étoffe selon l'une quelconque des revendications précédentes, dans laquelle l'étoffe est une étoffe non tissée ou une étoffe tissée ou tricotée qui contient une pluralité de fils, dans laquelle au moins une partie des fils comprend les fibres poreuses.

**13.** Étoffe selon la revendication 12, dans laquelle l'étoffe est un composite qui contient en outre des fibres textiles, telles que des fibres textiles généralement non élastiques et/ou des fibres textiles élastiques, telles que l'élastoester, le lastol, le spandex ou une combinaison de ceux-ci.

**14.** Étoffe selon la revendication 13, dans laquelle le composite comprend des fils formés à partir d'une combinaison des fibres poreuses et des fibres textiles ; et/ou des fils formés à partir des fibres poreuses et des fils formés à partir des fibres textiles.

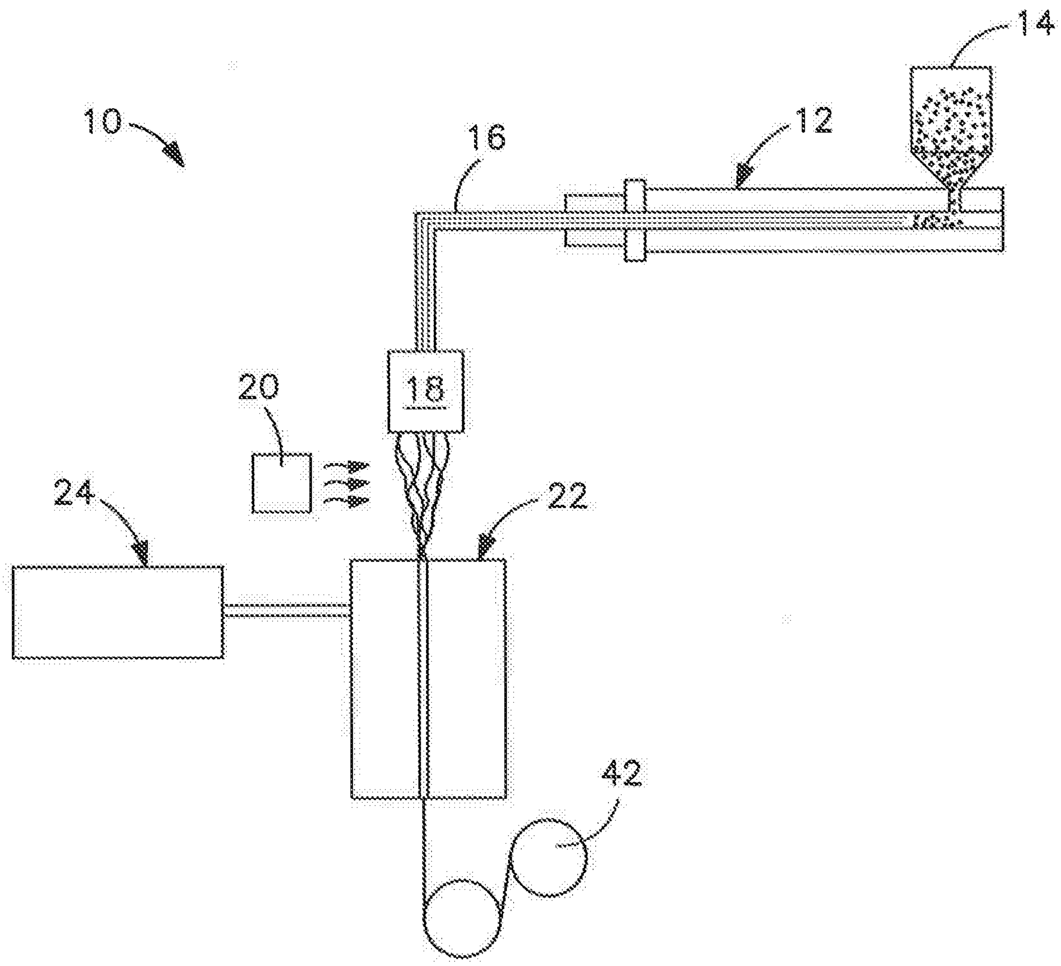


FIG. 1

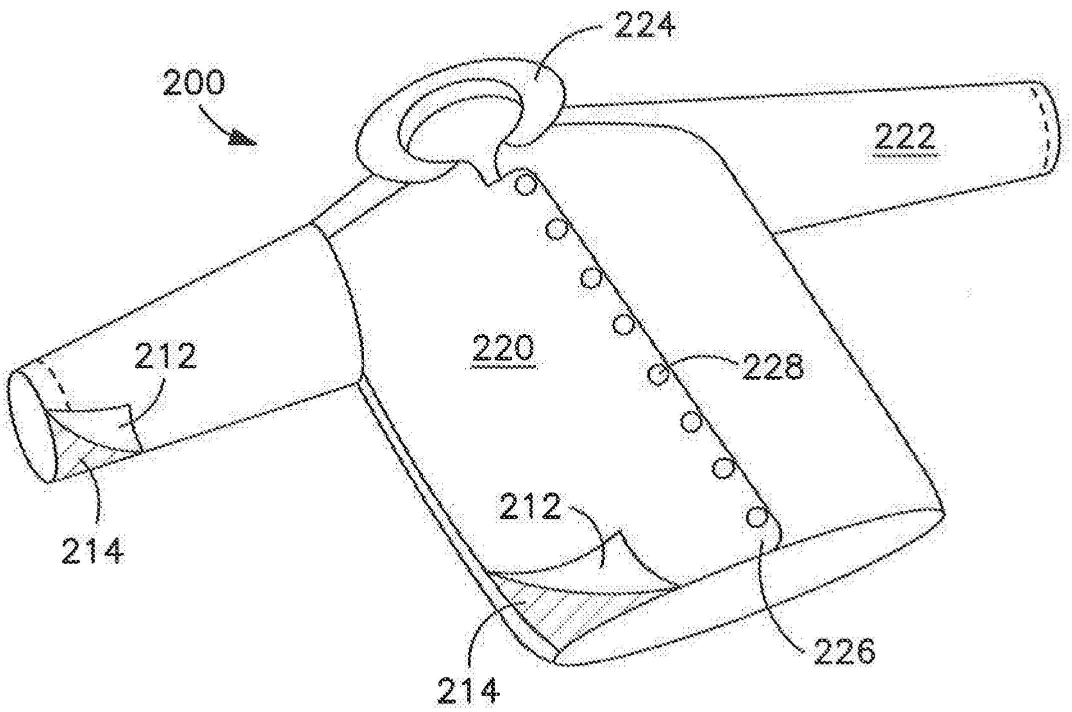


FIG. 2

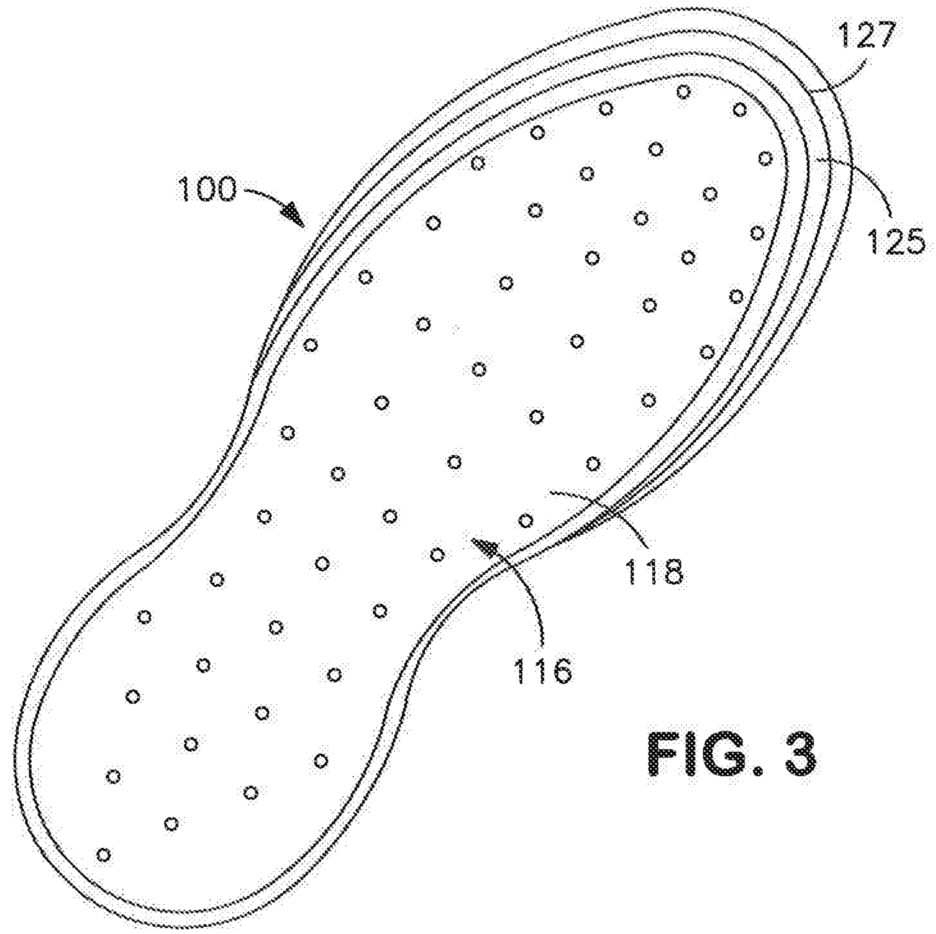


FIG. 3

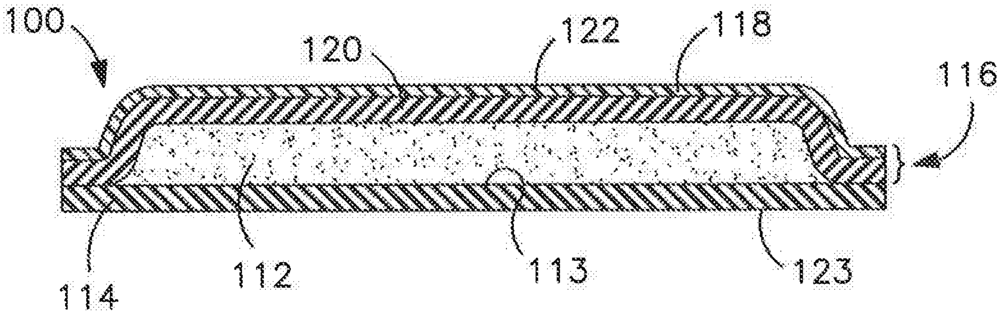


FIG. 4

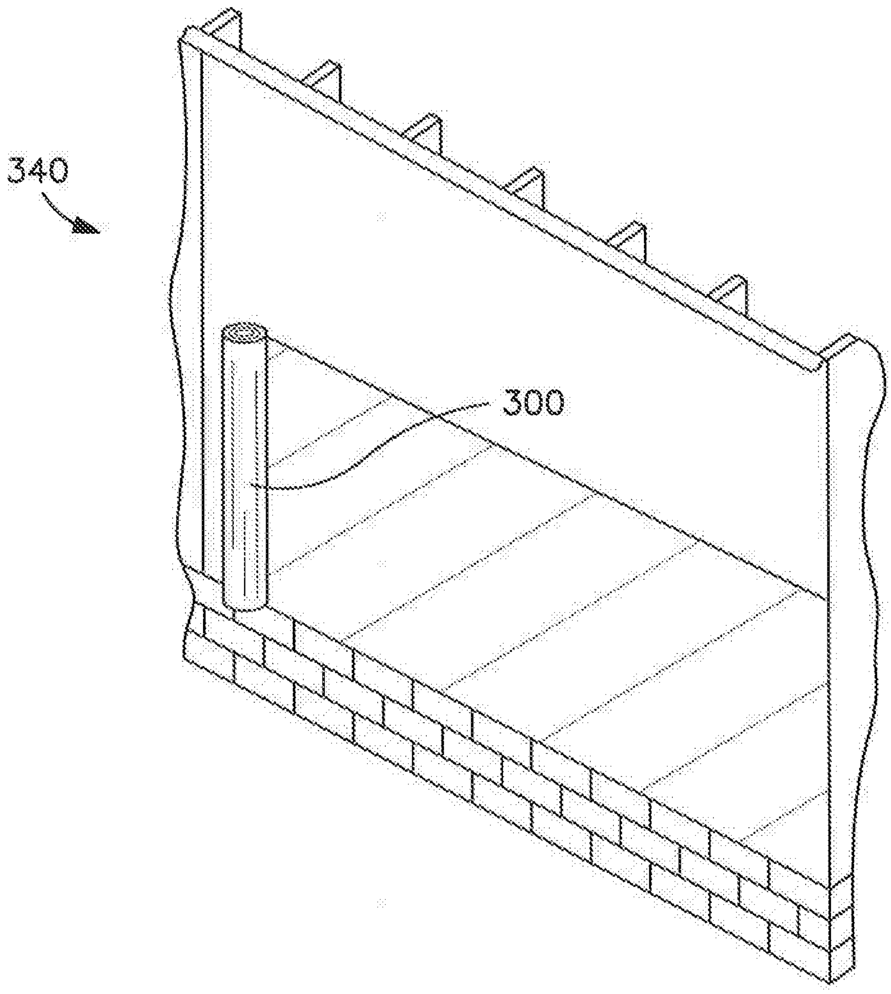


FIG. 5

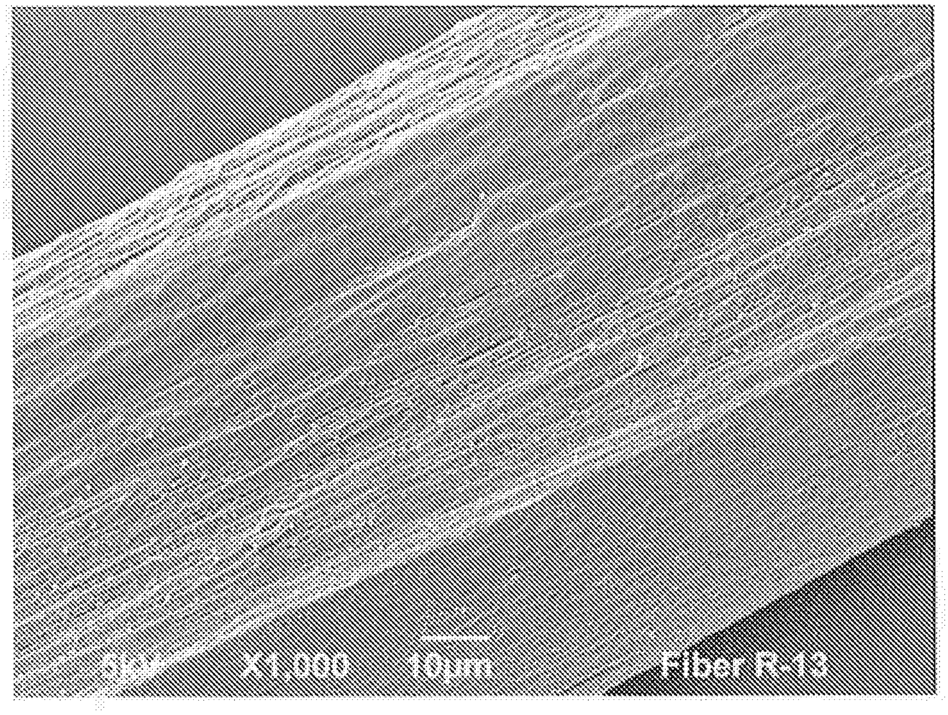


FIG. 6

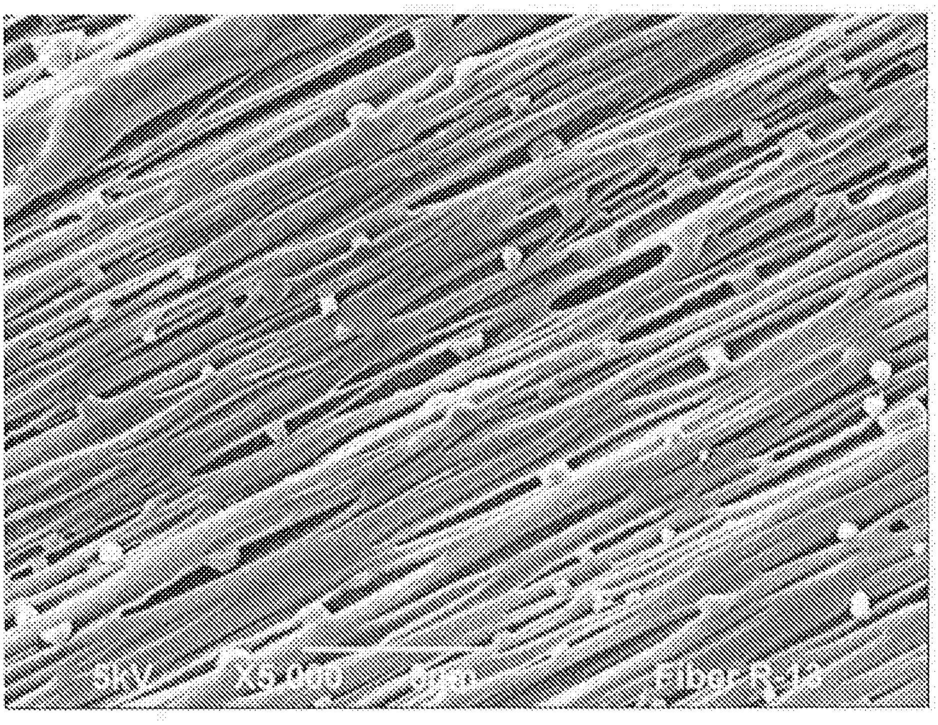


FIG. 7

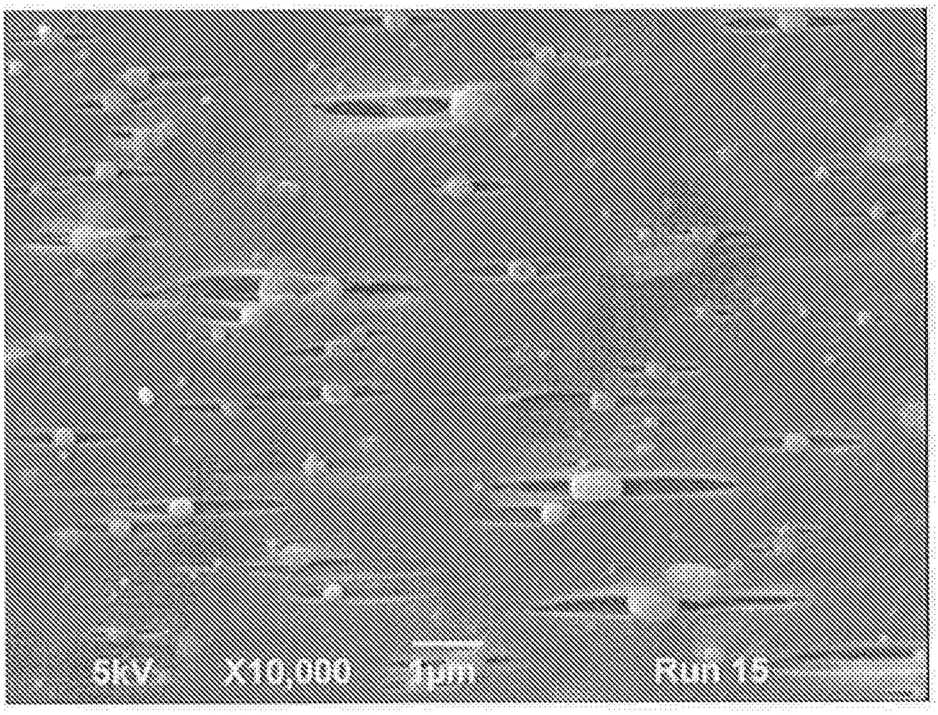


FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013118019 A
- US 4797468 A
- US 5470944 A
- US 5770682 A
- US 5821327 A
- US 5880254 A
- US 6326458 B
- US 4937299 A, Ewen
- US 5218071 A, Tsutsui
- US 5272236 A, Lai
- US 5278272 A, Lai
- US 6500563 B, Datta
- US 5539056 A, Yang
- US 5596052 A, Resconi
- US 5571619 A, McAlpin
- US 5322728 A, Davis
- US 5472775 A, Obijeski
- US 6090325 A, Wheat
- US 5179164 A
- US 3802817 A
- US 3423255 A


### Non-patent literature cited in the description


- **WYEYCH.** Solubility Handbook of Plastics. 2004